# EUROPEAN PATENT APPLICATION

(11) **EP 4 834 741 A1**
(43) Date of publication of application: **04.11.2026**
(21) Application number: 26175919.5
(22) Date of filing: 30.04.2026
(51) Int. Cl.: B62K 21/06, B62K 19/32, B62K 21/18

(54) **STEERING STOP ASSEMBLY**

(30) Priority: 02.05.2025 US 202563798858 P
(71) Applicant: Specialized Bicycle Components, Inc., Morgan Hill, CA 95037 (US)
(72) Inventor: MELOTTI, Matteo, St Silvester (CH); KÜRNER, Denis Christoph, St Peter (DE)
(74) Representative: Forresters IP LLP

(57) **Abstract**

A multi-stage steering stop assembly (178) may include a frame (122), a static structure (254) fixed to the frame, and a first dynamic stopping structure (318) that rotates about an axis (A1) and engages the static structure. The static structure may limit rotation of the first dynamic stopping structure about the axis. The multi-stage steering stop assembly may further include a second dynamic stopping structure (190) that rotates relative to the first dynamic stopping structure about the axis. The first dynamic stopping structure may limit rotation of the second dynamic stopping structure about the axis.

## Description

### CROSS-REFERENCE TO RELATED APPLICATIONS

This application claims priority to U.S. Provisional Application No. 63/798,858, filed May 2, 2025.

### FIELD

The present disclosure relates generally to bicycles and to steering stop assemblies for bicycles.

### BACKGROUND

A bicycle commonly includes a frame, a handlebar, and a front fork. The front fork is coupled to the handlebar for co-rotation with the handlebar, such that rotation of the handlebar rotates the front fork and a front wheel coupled to the front fork. To inhibit damage to the frame, the handlebar, the front fork, and/or the front wheel, many bicycles include what is commonly referred to as a steering stop assembly. The steering stop assembly limits a degree of rotation of the front fork, such that the front fork is permitted to rotate only within a predefined angle or range of angles.

### BRIEF DESCRIPTION OF THE DRAWINGS

FIG. 1 is a side view of a bicycle having a steering stop assembly according to one example.
FIG. 2 is a perspective view of the steering stop assembly of FIG. 1.
FIG. 3 is an exploded, perspective of the steering stop assembly of FIG. 1.
FIG. 4 is an exploded, perspective view of a portion of the steering stop assembly of FIG. 1, illustrating a head tube and a frame chip that may be fixed to the head tube.
FIG. 5 is a perspective view of the head tube of FIG. 4.
FIG. 6 is a top view of the head tube of FIG. 4.
FIGS. 7 and 8 are perspective views of the frame chip of FIG. 4.
FIG. 9 is a partial perspective view of the steering stop assembly of FIG. 1, illustrating the frame chip fixed to the head tube, and further illustrating a bearing spacer and a compression ring of the steering stop assembly.
FIGS. 10 and 11 are perspective views of a hammer of the steering stop assembly of FIG. 1
FIG. 12 is a partial perspective view of the steering stop assembly of FIG. 1, illustrating how the hammer may be positioned relative to the head tube, the frame chip, the bearing spacer, and the compression ring.
FIG. 13 is an exploded, partial perspective view of the steering stop assembly of FIG. 1, illustrating a spacer assembly and a handlebar stem.
FIGS. 14 and 15 are perspective views of a spacer of the spacer assembly of FIG. 13.
FIG. 16 is a perspective view of a handlebar stem of the spacer assembly of FIG. 13.
FIG. 17 is a partial perspective view of the steering stop assembly of FIG. 1, illustrating how the hammer is positioned relative to the spacer assembly of FIG. 13.
FIGS. 18 and 19 are enlarged, partial perspective views of an upper, breakable fuse portion of the hammer positioned within a first recess of one of the spacers of the spacer assembly of FIG. 13.
FIGS. 20 and 21 are enlarged, partial perspective views of an additional upper portion of the hammer positioned within a second recess of the spacer of the spacer assembly of FIG. 13.
FIG. 22 is a partial perspective view of the steering stop assembly of FIG. 1, illustrating how the hammer may be positioned relative to both the bearing spacer and a top cap.
FIG. 23 is a side view of a bicycle having a steering stop assembly according to another example.
FIG. 24 is a perspective view of the of the steering stop assembly of FIG. 23.
FIG. 25 is an exploded, perspective view of the steering stop assembly of FIG. 23
FIG. 26 is a partial, perspective view of the steering stop assembly of FIG. 23, illustrating a frame chip fixed to a head tube, and a compression ring.
FIGS. 27 and 28 are perspective views of a headset cover of the steering stop assembly of FIG. 23.
FIG. 29 is a partial, perspective view of the steering stop assembly of FIG. 23, illustrating how the headset cover may be positioned over the frame chip and the compression ring.
FIGS. 30 and 31 are perspective views of the headset cover and the frame chip of the steering stop assembly of FIG. 23, illustrating how the headset cover may be positioned relative to the frame chip.
FIGS. 32 and 33 are perspective views of a transition spacer of the steering stop assembly of FIG. 23.
FIG. 34 is a partial, perspective view of the steering stop assembly of FIG. 23, illustrating how the transition spacer may be positioned above the headset cover, and may include wings to be engaged by a handlebar stem.

### DETAILED DESCRIPTION

Before any examples of the disclosure are explained in detail, it is to be understood that the disclosure is not limited in its application to the details of the examples and the arrangement of components set forth in the following description or illustrated in the accompanying drawings. The disclosure can support other constructions and of being practiced or of being carried out in various ways.

According to one example, a multi-stage steering stop assembly may include a frame, a static structure fixed to the frame, and a first dynamic stopping structure that rotates about an axis and engages the static structure. The static structure may limit rotation of the first dynamic stopping structure about the axis. The multi-stage steering stop assembly may further include a second dynamic stopping structure that rotates relative to the first dynamic stopping structure about the axis. The first dynamic stopping structure may limit rotation of the second dynamic stopping structure about the axis.

According to another example, a steering stop assembly may include a frame, a static structure coupled to the frame, a handlebar coupled to the frame and having a handlebar stem, and a dynamic stopping structure positioned below the handlebar stem and interlocked with the handlebar stem, such that rotation of the handlebar rotates the dynamic stopping structure. The dynamic stopping structure may include a stop surface that engages the static structure upon rotation of the handlebar.

According to another example, a multi-stage steering stop assembly may include a frame, a static structure fixed to the frame, and a first dynamic stopping structure that rotates about an axis and engages the static structure. The static structure may limit rotation of the first dynamic stopping structure about the axis. The multi-stage steering stop assembly may further include a second dynamic stopping structure that rotates relative to the first dynamic stopping structure about the axis after a portion of the first dynamic stopping structure has failed. The multi-stage steering stop assembly may further include a visual indicator that informs a user that the portion of the first dynamic stopping structure has failed and that the second dynamic stopping structure has rotated about the axis relative to first dynamic stopping structure.

According to another example, a multi-stage steering stop assembly may include a frame, a static structure fixed to the frame, a first dynamic stopping structure that rotates about an axis, and a second dynamic stopping structure that rotates about the axis. The first dynamic stopping structure may include a first stop surface along a bottom of the first dynamic stopping structure that engages the static structure, and the first dynamic stopping structure may include a second stop surface along a top of the first dynamic stopping structure that engages the second dynamic stopping structure.

According to another example, a multi-stage steering stop assembly may include a frame, a static structure fixed to the frame, and a first dynamic stopping structure that rotates about an axis and engages the static structure. The static structure may limit rotation of the first dynamic stopping structure about the axis. The multi-stage steering stop assembly may further include a second dynamic stopping structure that rotates relative to the first dynamic stopping structure about the axis. The first dynamic stopping structure may include a breakable stop surface, and the second dynamic stopping structure may break the breakable stop surface.

According to another example, a multi-stage steering stop assembly may include a frame, a static structure fixed to the frame, and a first dynamic stopping structure that rotates about an axis and engages the static structure. The static structure may limit rotation of the first dynamic stopping structure about the axis. The multi-stage steering stop assembly may further include a second dynamic stopping structure that rotates relative to the first dynamic stopping structure about the axis. A portion of the first dynamic stopping structure may extend into the second dynamic stopping structure. The second dynamic stopping structure may include a wall, and the wall may limit rotation of the second dynamic stopping structure relative to the first dynamic stopping structure.

According to another example, a multi-stage steering stop assembly may include a frame, a first stop surface, a second stop surface, and a dynamic stopping structure that rotates about an axis relative to the frame. At least a portion of the dynamic stopping structure may engage the first stop surface upon a rotation of the dynamic stopping structure about the axis, and at least a portion of the dynamic stopping structure may engage the second stop surface after the first stop surface has failed.

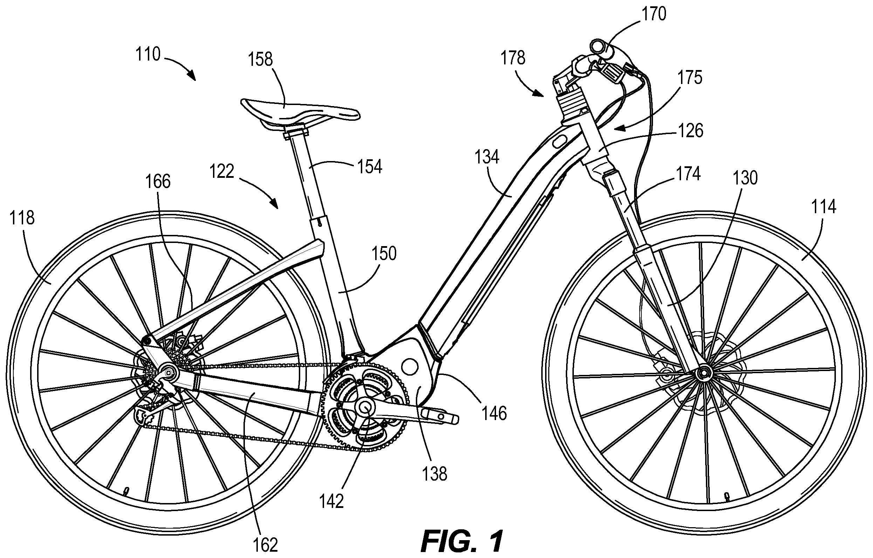

FIG. 1 illustrates a bicycle 110 having a front wheel 114, a rear wheel 118, a frame 122, and a front fork 130. The front fork 130 may be supported by the front wheel 114, and the frame 122 may be supported by the rear wheel 118. The bicycle 110 is illustrated in FIG. 1 as an electric, active bicycle (e.g., urban bicycle), but in other examples the bicycle 110 may be an active or other type of bicycle (e.g., a road bicycle, a mountain bicycle, a gravel bicycle, a hybrid bicycle), and/or may be an analog or electric bicycle. Further, although a particular configuration of the frame 122 is illustrated in FIG. 1, in other examples the bicycle 110 may be implemented with other configurations of the frame 122 than that which is illustrated. In these examples, the frame 122 may be implemented with other configurations having different shapes, sizes, and/or frame components.

In some examples, the frame 122 may include a head tube 126, which may rotationally support the front fork 130. In further examples, the frame 122 may include a down tube 134 connected to the head tube 126 and extending rearward from the head tube 126. The down tube 134 may be sized and shaped to receive a battery. Other examples may not include a battery. While not illustrated, in some examples the frame 122 may also, or alternatively, include a top tube connected to and extending rearward from the head tube 126 (e.g., above the down tube 134).

In some examples, the frame 122 may include a bottom bracket 138, and the down tube 134 may extend generally downward from the head tube 126 and toward the bottom bracket 138 of the frame 122. The bottom bracket 138 may receive a crankset 142 of a drivetrain of the bicycle 110. A motor assembly 146, located for example at or near the bottom bracket 138, may be coupled for example to the battery and may generate powered rotation of the drivetrain.

In some examples, the frame 122 may include a seat tube 150. The seat tube 150 may be connected, for example, to the bottom bracket 138 and/or to a top tube if included. The seat tube 150 may support a seat post 154 and a seat 158. For example, the seat tube 150 may receive the seat post 154, which may support the seat 158. The seat post 154 and/or the seat 158 may be adjustable (e.g., vertically) relative to the seat tube 150, such as, for example, to accommodate for different sizes of riders and/or for different slopes of terrain.

In some examples, the frame 122 may include a chainstay 162 and/or a seatstay 166. The frame 122 may include a frame triangle (e.g., a rear triangle) that supports the rear wheel 118, and the frame triangle may include the chainstay 162 and/or the seatstay 166. Further, the frame 122 may include a second chainstay and/or seatstay, and a second frame triangle (e.g., rear triangle) that supports the rear wheel 118 on an opposite side of the rear wheel 118. The second chainstay may be similar or identical to the chainstay 162, and/or the second seatstay may be similar or identical to the seatstay 166.

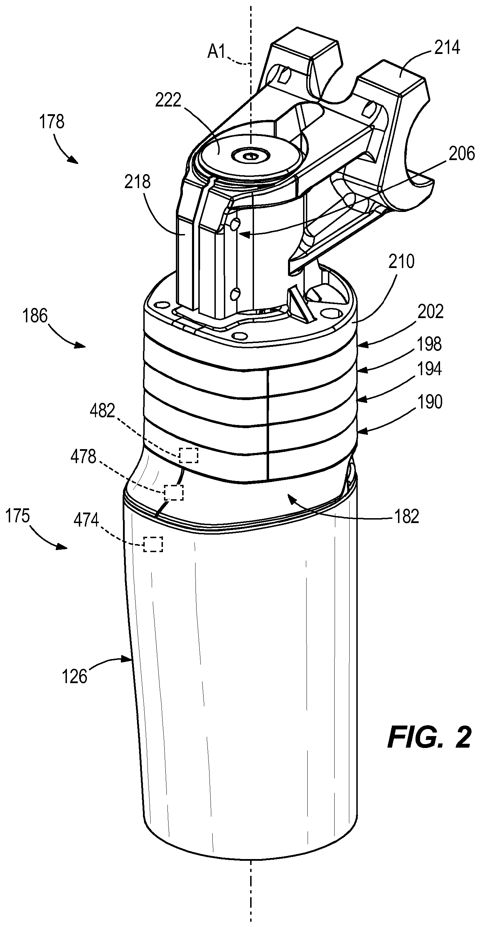

With continued reference to FIG. 1, in many examples, the bicycle 110 may include a handlebar 170 for turning the front fork 130, and the front wheel 114 via the front fork 130. The handlebar 170 may be coupled to the front fork 130, such as, for example, by a handlebar stem 206 (FIG. 2).

In some examples, the bicycle 110 may include at least one suspension assembly located at one or more positions on the bicycle 110, including on or within the frame 122 and/or on or within the front fork 130. For example, at least one suspension assembly may be located at least partially within the front fork 130, and/or formed as part of the front fork 130. The suspension assembly(s) may absorb and damp shocks exerted on the bicycle 110 such as by uneven terrain and other kinetic impacts, and may include springs (e.g., coil springs, fluid or air springs, elastomer springs), dampers, resilient materials, and/or other elements that individually, or in combination, function to absorb and damp shocks exerted on the bicycle 110.

In some examples, one or more of the suspension assembly(s) may be coupled (e.g., directly coupled) between two components of the bicycle 110. In further examples, one or more of the suspension assembly(s) may be coupled (e.g., directly coupled) between a component of the frame 122 and the rear wheel 118, and/or between a component of the front fork 130 and the front wheel 114. In the illustrated example, the bicycle 110 includes a suspension assembly 174 that is coupled to, or forms part of, the front fork 130. In other examples, one or more of the suspension assembly(s) may be coupled (e.g., directly coupled) between a component of the frame 122 and the seat post 154 and/or the seat 158. In yet other examples, one or more of the suspension assembly(s) may be coupled (e.g., directly coupled) between a component of the front fork 130 and the handlebar 170. In these or other examples, other quantities and/or positions of suspension assemblies may be implemented. Other examples may not include any suspensions assemblies.

With reference to FIGS. 1 and 2, the bicycle 110 may include a headset assembly 175 and a steering stop assembly 178, and in many examples, the headset assembly 175 may include at least part or all of the steering stop assembly 178. In many examples, the headset assembly 175 facilitates rotation of the front fork 130 about an axis A1 (FIG. 2). For example, the headset assembly 175 may facilitate rotation of a portion of the front fork 130 (e.g., a steerer tube of the front fork 130) within the head tube 126. In these or other examples, the steering stop assembly 178 limits rotation of the front fork 130 about the axis A1 (FIG. 2). In many examples, the steering stop assembly 178 further functions to limit rotational movement of the handlebar 170 and/or the front wheel 114 about the axis A1 (FIG. 2). As explained in more detail herein, the steering stop assembly 178 may inhibit damage to the frame 122, the handlebar 170, the front fork 130, the front wheel 114, cables, wires, and/or hydraulic hoses, by limiting rotation of the front fork 130, the handlebar 170, and/or the front wheel 114 about the axis A1 (FIG. 2), thereby preventing the handlebar 170, the front fork 130, and/or the front wheel 114 from contacting the frame 122.

As illustrated in FIG. 2, the headset assembly 175 may include a top cap 182 and/or a spacer assembly 186. In the illustrated example, the headset assembly 175 includes both of the top cap 182 and the spacer assembly 186. The top cap 182 is positioned axially between the head tube 126 and the spacer assembly 186. In many examples, the steering stop assembly 178 may include the top cap 182 and/or the spacer assembly 186. In other examples, the top cap 182 and/or the spacer assembly 186 can be omitted.

With continued reference to FIG. 2, other examples of the headset assembly 175 and/or the steering stop assembly 178 may include other arrangements. For example, the headset assembly 175 and/or the steering stop assembly 178 may not include the top cap 182, but may still include the spacer assembly 186. The spacer assembly 186 may be positioned for example axially above the head tube 126.

In yet other examples, the headset assembly 175 and/or the steering stop assembly 178 may not include the spacer assembly 186, but may still include the top cap 182. The top cap 182 may still be positioned for example axially above the head tube 126.

With continued reference to FIG. 2, the spacer assembly 186 may include a first spacer 190, a second spacer 194 positioned above the first spacer 190, a third spacer 198 positioned above the second spacer 194, and a fourth spacer 202 positioned above the third spacer 198. Other examples of the spacer assembly 186 may include other numbers of spacers (e.g., a single spacer, two spacers, three spacers, five spacers, or more than five spacers). In yet other examples, the spacer assembly 186 may be omitted.

As illustrated in FIG. 2, the headset assembly 175 may include a handlebar stem 206. The headset assembly 175 may have a lower stem spacer 210 along a bottom of the handlebar stem 206. In many examples, the steering stop assembly 178 may include the handlebar stem 206.

In some examples, and as seen in FIG. 2, the lower stem spacer 210 may be positioned axially above and coupled (e.g., directly coupled) to or linked (e.g., interlocked) with the fourth spacer 202 of the spacer assembly 186. In other examples, the lower stem spacer 210 may instead be positioned axially above and coupled (e.g., directly coupled) to or linked (e.g., interlocked) with the third spacer 198, the second spacer 194, or the first spacer 190 of the spacer assembly 186. In yet other examples, the lower stem spacer 210 may be positioned axially above and coupled (e.g., directly coupled) to or linked (e.g., interlocked) with a different component of the headset assembly 175 and/or the steering stop assembly 178 (e.g., where the spacer assembly 186 is omitted, or where the spacer assembly 186 includes more than four spacers).

With continued reference to FIG. 2, the handlebar stem 206 itself may overall be sized and shaped to be coupled (e.g., fixed) to the handlebar 170. For example, the handlebar stem 206 may include at least one fastening region 214 that is sized and shaped to receive and/or otherwise engage the handlebar 170. Other examples may include other shapes and sizes of a fastening region 214, and/or may include other structures for fastening the handlebar stem 206 to the handlebar 170. In yet other examples, at least a portion of the handlebar 170 may be formed integrally in a single monolithic piece with the handlebar stem 206.

As illustrated in FIG. 2, the handlebar stem 206 may include a clamping region 218 that is sized and shaped to clamp the handlebar stem 206 onto the front fork 130 (e.g., to a steerer tube of the front fork 130). The clamping region 218 may include, for example, one or more C-shaped, U-shaped, or other-shaped regions with arms, walls, wings, and/or other structures that may be pulled tightly together via for example a fastener or fasteners, to thereby clamp the clamping region 218 onto the front fork 130, such that rotation of the handlebar 170 generates a rotation of the front fork 130 and the front wheel 114 about the axis A1. Other examples may include other types and arrangements of clamping regions than that illustrated. In some examples, the handlebar stem 206 does not include a clamping region 218. In some examples, the handlebar stem 206 is not provided. For example, the handlebar stem 206 may be replaced with an adapter. A stem may then be assembled over the adapter and clamped to the front fork 130 (e.g., to the steerer tube of the front fork 130). In these examples, the lower stem spacer 210 (if provided) may form part of the adapter, or part of the stem that is assembled over the adapter.

With continued reference to FIG. 2, in some examples the headset assembly 175 may include a headset cap 222. In further examples, the steering stop assembly 178 may include the headset cap 222. The headset cap 222 may be coupled to the handlebar stem 206 (e.g., along a top of the handlebar stem 206, opposite the lower stem spacer 210). The headset cap 222 may be positioned at, and/or extend into, the clamping region 218. In other examples, the headset assembly 175 and/or the steering stop assembly 178 may include other arrangements of a headset cap 222, or the headset cap 222 may be omitted.

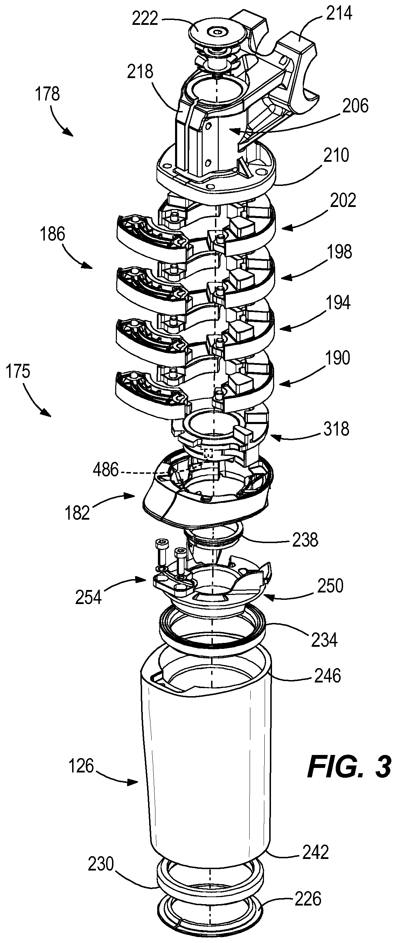

With reference to FIG. 3, the headset assembly 175 may include a headset crown race 226, a lower headset bearing 230, an upper headset bearing 234, and/or a compression ring 238. In further examples, the steering stop assembly 178 may include the headset crown race 226, the lower headset bearing 230, the upper headset bearing 234, and/or the compression ring 238. The lower headset bearing 230 may be positioned for example within the head tube 126 near a lower end 242 of the head tube 126, and the upper headset bearing 234 may be positioned for example within the head tube 126 near an upper end 246 of the head tube 126. The headset crown race 226 may be positioned axially below the lower headset bearing 230, and the compression ring 238 may be positioned axially above the upper headset bearing 234. In other examples, the headset assembly 175 and/or the steering stop assembly 178 may include other numbers and/or arrangements of crown races, headset bearings, and/or compression rings than that illustrated. In still other examples, the headset crown race 226, the lower headset bearing 230, the upper headset bearing 234, and/or the compression ring 238 may be omitted.

With continued reference to FIG. 3, the headset assembly 175 may include a bearing spacer 250. In further examples, the steering stop assembly 178 may include the bearing spacer 250. The bearing spacer 250 may be positioned for example axially above the upper headset bearing 234, and below the compression ring 238. In some examples, at least a portion of the bearing spacer 250 may be positioned within the head tube 126, for example at the upper end 246 of the head tube 126. In other examples, the headset assembly 175 and/or the steering stop assembly 178 may include other positions of the bearing spacer 250, and/or other sizes and shapes of a bearing spacer 250 than that illustrated. In some examples, the bearing spacer 250 may be omitted, or the headset assembly 175 and/or the steering stop assembly 178 may include a bearing spacer 250 having a different shape or size than that illustrated.

With reference to FIGS. 3-8, the steering stop assembly 178 may include a static structure 254 that is coupled (e.g., fixed) to the frame 122. For example, the static structure 254 may be coupled to the frame 122 at the head tube 126, at the down tube 134, at a top tube of the frame 122, or at another portion of the frame 122. As described in further detail below, the static structure 254 may limit rotation of the front fork 130, the handlebar 170, and/or the front wheel 114 about the axis A1 (FIG. 2).

As illustrated in FIGS. 3-8, in some examples the static structure 254 may be a frame chip that is fastened to the frame 122. In many examples, the frame chip may be fastened to the head tube 126 at the upper end 246 of the head tube 126.

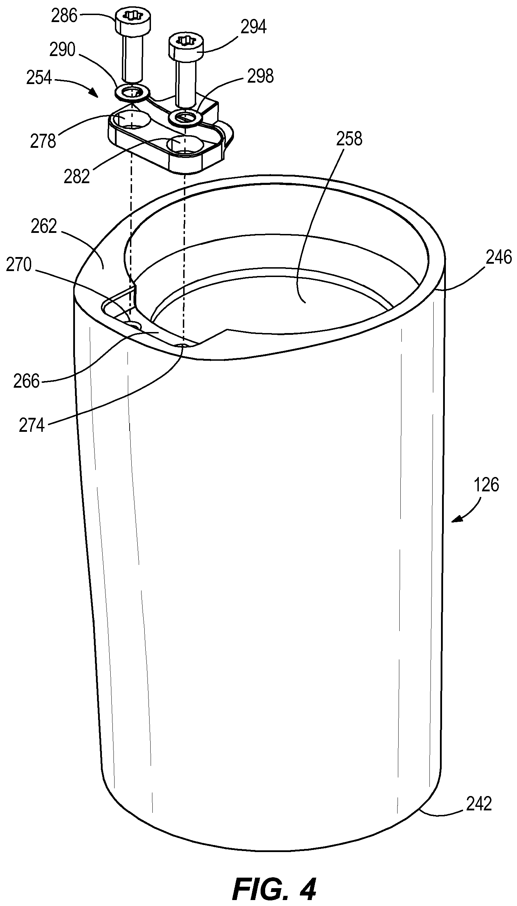

For example, and with reference to FIGS. 4-6, the head tube 126 may define a central head tube aperture 258 that extends entirely axially through the head tube 126, and is sized and shaped to receive the lower headset bearing 230 and the upper headset bearing 234. The upper end 246 of the head tube 126 may include an upper surface 262 that extends (e.g., entirely) around the central head tube aperture 258, and a recessed surface 266 that is recessed (e.g., axially) below the upper surface 262 and is sized and shaped to receive and/or couple to the static structure 254. In some examples, the recessed surface 266 may extend parallel to the upper surface 262. Other examples may not include a recessed surface 266. For example, the static structure 254 may instead be received by and/or coupled to the upper surface 262, to a surface that is elevated above the upper surface 262, or to a different surface.

With continued reference to FIGS. 4-6, the head tube 126 may include first head tube fastening aperture 270 (e.g., a threaded blind aperture) located on and extending below the recessed surface 266, and a second head tube fastening aperture 274 (e.g., a threaded blind aperture) located on and extending below the recessed surface 266. The static structure 254 itself may include a first static structure aperture 278 that is sized and shaped and positioned to align with the first head tube fastening aperture 270, and a second static structure aperture 282 that is sized and shaped and positioned to align with the second head tube fastening aperture 274.

A first fastener 286 (e.g., threaded fastener) may extend through a washer 290 and through the first static structure aperture 278 and into the first head tube fastening aperture 270, and a second fastener 294 (e.g., threaded fastener) may extend through a second washer 298 and through the second static structure aperture 282 and into the second head tube fastening aperture 274, thereby fastening the static structure 254 into place on the head tube 126.

Other examples may include other numbers and arrangements of fasteners, washers, static structure apertures, and/or head tube fastening apertures than that illustrated, or may include other manners of fastening the static structure 254 to the head tube 126. For example, while two fasteners and washers are illustrated, in other examples only a single fastener and washer may be used to fix the static structure 254 to the head tube 126, or more than two fasteners and/or washers. In some examples, no washers may be provided. Additionally, in some examples, one or more of the fasteners may include a tool engagement region or regions for ease of using a tool to rotate the fastener.

In yet other examples, the head tube 126 may itself already include a static structure that is formed integrally as a single monolithic piece therewith (e.g., as a protrusion, rib, and/or other integral structure), such that no fasteners and/or washers are required to fix the static structure 254 to the head tube 126.

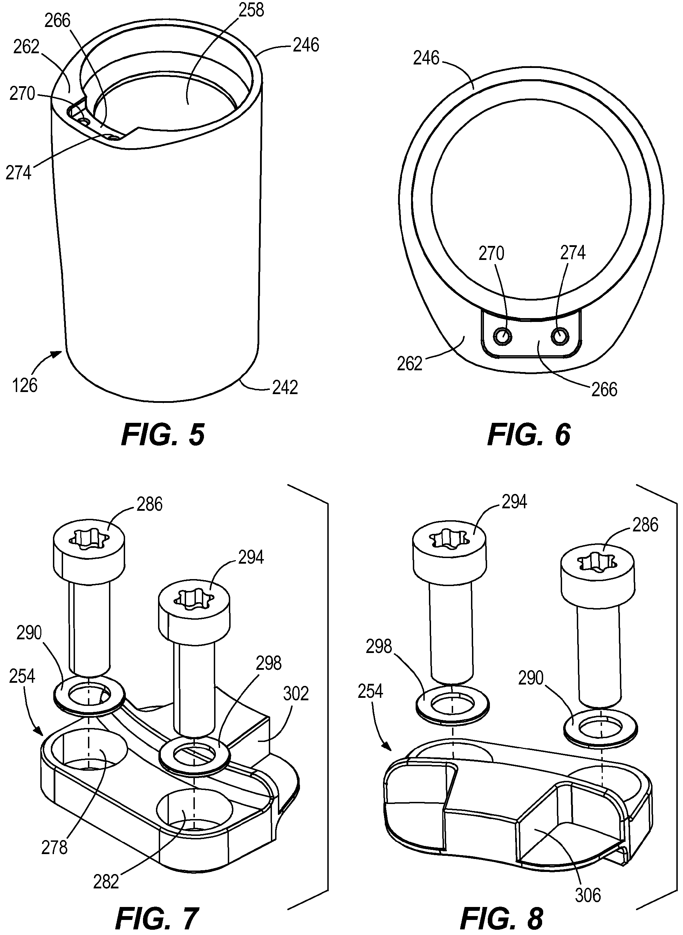

With reference to FIGS. 7-9, the static structure 254 may include at least one steering stop surface that limits rotation of the front fork 130, the handlebar 170, and/or the front wheel 114 about the axis A1 (FIG. 2). For example, and as seen in FIGS. 7-9, the static structure 254 may include a first static structure steering stop surface 302 and a second static structure steering stop surface 306. The first static structure steering stop surface 302 may be oriented to face in a first direction such that the first static structure steering stop surface 302 limits rotation of the front fork 130, the handlebar 170, and/or the front wheel 114 in a first rotational direction. The second static structure steering stop surface 306 may be oriented to face in a second direction such that the second static structure steering stop surface 306 limits rotation of the front fork 130, the handlebar 170, and/or the front wheel 114 in a second rotational direction. The first direction may be opposite to the second direction, and/or the first rotational direction may be opposite to the second rotational direction.

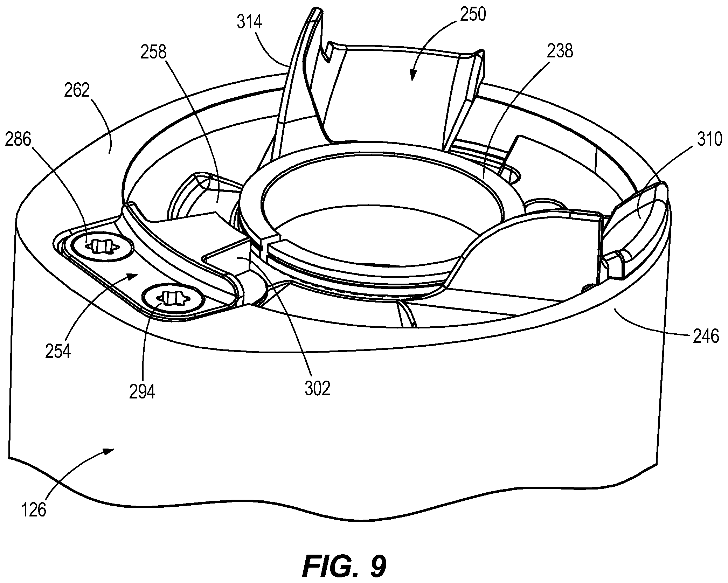

With reference to FIG. 9, in some examples, such as, for example, when the static structure 254 is coupled (e.g., fixed) to the head tube 126, first static structure steering stop surface 302 (and similarly the second static structure steering stop surface 306) may project into and/or over the central head tube aperture 258 of the head tube 126, and/or may be located radially inwardly of the upper surface 262.

With continued reference to FIG. 9, and as described above, the bearing spacer 250 may be positioned for example axially below the compression ring 238, and at the upper end 246 of the head tube 126. The bearing spacer 250 may include a first bearing spacer wing 310 that extends partially over and rests on the upper surface 262 and a second bearing spacer wing 314 that extends partially over and rests on the upper surface 262. In the assembled state as seen in FIG. 9, the compression ring 238 may be positioned radially inwardly of the first bearing spacer wing 310 and the second bearing spacer wing 314, and further may be positioned radially inwardly of both the first static structure steering stop surface 302 and the second static structure steering stop surface 306. Other examples may include various other arrangements of a bearing spacer, compression ring, and/or static structure stop surfaces than that illustrated.

With reference to FIGS. 2, 3 and 10-22, the steering stop assembly 178 may include at least one dynamic stopping structure that rotates relative to the head tube 126 about the axis A1, and/or includes at least one stop surface that limits rotation of the front fork 130, the handlebar 170, and/or the front wheel 114 about the axis A1. As described in further detail below, the dynamic stopping structure or structures may include one or more stop surfaces, and/or may include one or more walls or projections including the one or more stop surfaces. In some examples, one or more of the stop surfaces may engage the static structure 254 to limit rotation of the front fork 130, the handlebar 170, and/or the front wheel 114 about the axis A1. In some examples, one or more of the stop surfaces may engage a surface of another dynamic stopping structure to limit rotation of the front fork 130, the handlebar 170, and/or the front wheel 114 about the axis A1. In some examples, one or more of the stop surfaces may be a breakable stop surface that is configured to break, or is part of a wall or projection that is configured to break when subjected to a predetermined torque or other force.

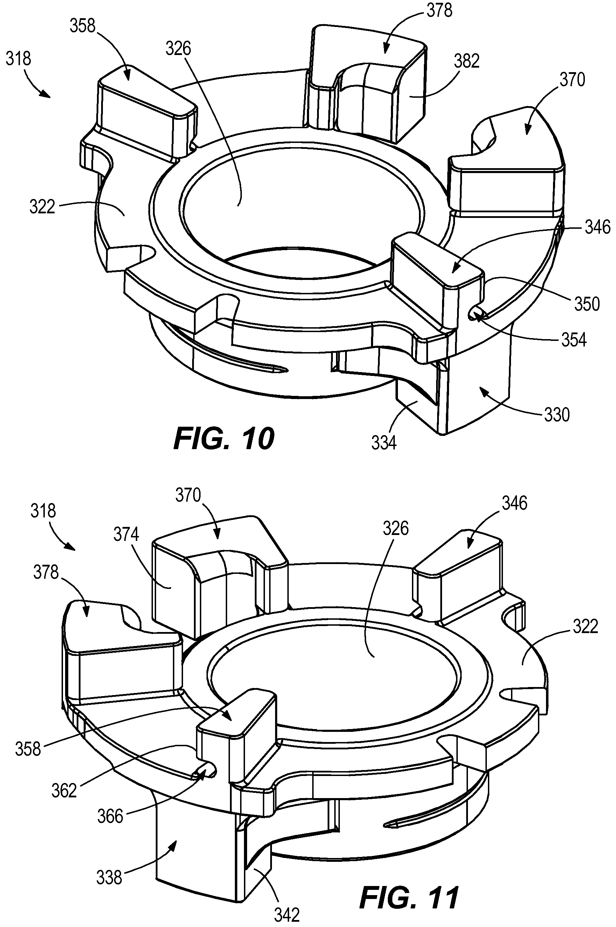

With reference to FIGS. 3 and 10-12, one example of a dynamic stopping structure may be a hammer 318. As illustrated in FIGS. 10-12, the hammer 318 may include a main hammer body 322 defining a central hammer aperture 326. The central hammer aperture 326 may be aligned, for example, with the axis A1 (FIG. 2), and the main hammer body 322 may generally extend circumferentially about the central hammer aperture 326 and the axis A1. Other examples of the hammer 318 may not include a central hammer aperture 326, and/or may include a main hammer body 322 having a different size and/or shape than that illustrated.

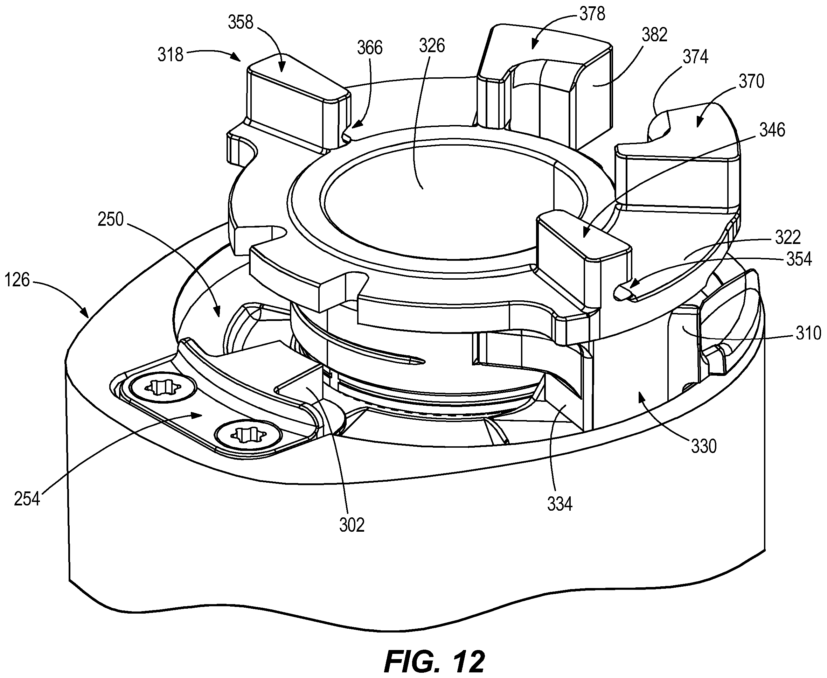

With continued reference to FIGS. 10-12, the hammer 318 may include one or more stop surfaces. For example, and as seen in FIGS. 10 and 12, the hammer 318 may include a first lower projecting hammer region 330 that extends axially below the main hammer body 322. The first lower projecting hammer region 330 may include a first lower hammer stop surface 334. As illustrated in FIG. 12, the first lower hammer stop surface 334 may be aligned with the first static structure steering stop surface 302 of the static structure 254 in a plane perpendicular to axis A1 (FIG. 2), such that when the hammer 318 rotates about the axis A1 in the first rotational direction (e.g., a clockwise direction as viewed in FIG. 12), the first lower hammer stop surface 334 eventually contacts the first static structure steering stop surface 302, thereby stopping the rotation of the hammer 318.

With reference to FIG. 11, the hammer 318 may further include a second lower projecting hammer region 338 that extends axially below the main hammer body 322. The second lower projecting hammer region 338 may include a second lower hammer stop surface 342. The second lower hammer stop surface 342 may be aligned with the second static structure steering stop surface 306 of the static structure 254 in a plane perpendicular to axis A1 (FIG. 2), such that when the hammer 318 rotates about the axis A1 in the second rotational direction (e.g., a counterclockwise direction as viewed in FIG. 12), the second lower hammer stop surface 342 eventually contacts the second static structure steering stop surface 306, thereby stopping the rotation of the hammer 318.

Other examples of the hammer 318 may include only a single lower projecting hammer region and a single lower stop surface (e.g., below the main hammer body 322), or more than two lower projecting hammer regions and more than two lower stop surfaces (e.g., below the main hammer body 322).

With continued reference to FIG. 12, in some examples the hammer 318 may be aligned with the bearing spacer 250 such that the first lower projecting hammer region 330 abuts and/or presses against the first bearing spacer wing 310 in at least one rotational position of the hammer 318, and the second lower projecting hammer region 338 abuts and/or presses against the second bearing spacer wing 314 in at least one rotational position of the hammer 318. In some examples, the bearing spacer 250 may be free to rotate within the head tube 126. Accordingly, when the hammer 318 is rotated about the axis A1 (FIG. 2) in the second rotational direction, the first lower projecting hammer region 330 (or a portion of the top cap 182 that sits between the hammer 318 and the first bearing spacer wing 310) may press against the first bearing spacer wing 310 and cause the bearing spacer 250 to rotate in the second rotational direction with the hammer 318. Similarly, when the hammer 318 is rotated about the axis A1 in the first rotational direction, the second lower projecting hammer region 338 (or a portion of the top cap 182 that sits between the hammer 318 and the second bearing spacer wing 314) may press against the second bearing spacer wing 314 and cause the bearing spacer 250 to rotate in the first rotational direction with the hammer 318. As described above, in some examples the bearing spacer 250 may be omitted, and/or may not be rotated via rotation of the hammer 318.

With reference to FIGS. 10 and 11, the hammer 318 may include at least one breakable stop surface. The breakable stop surface may be configured to break when sufficient force is applied to the at least one breakable stop surface.

For example, the hammer 318 may include a first breakable fuse portion 346 (e.g., projecting region) that extends axially above the main hammer body 322. In some examples, the first breakable fuse portion 346 may be located axially above the first lower projecting hammer region 330, or at another location along the hammer 318. The first breakable fuse portion 346 may include a first breakable stop surface 350. In some examples, and as seen in FIG. 10, the first breakable fuse portion 346 may include a first notch 354 located for example below or formed from the first breakable stop surface 350. The first notch 354 may facilitate a breaking action (i.e., failure) of the first breakable fuse portion 346 and the first breakable stop surface 350 when sufficient force is applied to the first breakable fuse portion 346 from one or more directions. For example, if a sufficient force applied to the first breakable fuse portion 346 in the first rotational direction (e.g., the clockwise direction in FIG. 10) at a region of the first breakable fuse portion 346 located at or above the first notch 354 may eventually cause the first breakable stop surface 350 to fail and break. Other examples may not include the first notch 354, or may include other features and/or shapes of the first breakable fuse portion 346 that facilitate at least a portion of the first breakable fuse portion 346 breaking under a sufficient (e.g., predetermined) force.

With reference to FIG. 11, in some examples the hammer 318 may also include a second breakable fuse portion 358 (e.g., projecting region) that extends axially above the main hammer body 322. In some examples, the second breakable fuse portion 358 may be located axially above the second lower projecting hammer region 338, or at another location along the hammer 318. The second breakable fuse portion 358 may include a second breakable stop surface 362. In some examples, and as seen in FIG. 11, the second breakable fuse portion 358 may include a second notch 366 located for example below or formed from the second breakable stop surface 362. The second notch 366 may facilitate a break (i.e., failure), of the second breakable fuse portion 358 and the second breakable stop surface 362 when sufficient force is applied to the second breakable fuse portion 358 from one or more directions. For example, if sufficient force is applied to the second breakable fuse portion 358 in the second rotational direction (e.g., the counterclockwise direction in FIG. 11) at a region of the second breakable fuse portion 358 located at or above the second notch 366 may eventually cause the second breakable stop surface 362 to fail and break. Other examples may not include the second notch 366, or may include other features and/or shapes of the second breakable fuse portion 358 that facilitate at least a portion of the second breakable fuse portion 358 breaking under a sufficient (e.g., predetermined) force.

Other examples of the hammer 318 may include only a single breakable fuse portion and a single breakable stop surface (e.g., above the main hammer body 322), or more than two breakable fuse portions and more than two breakable stop surfaces (e.g., above the main hammer body 322).

With reference to FIGS. 10-12, and as described in further detail below, in some examples the hammer 318 may include at least one additional (e.g., secondary) stop surface that limits a further rotation of the hammer 318 after a breakable fuse portion and/or breakable stop surface on the hammer 318 breaks. For example, and as seen in FIGS. 10-12, the hammer 318 may include a first upper projecting hammer region 370 along an upper portion of the hammer 318 that extends axially above the main hammer body 322. The first upper projecting hammer region 370 may include a first upper hammer stop surface 374. With continued reference to FIGS. 10-12, the hammer 318 may also include a second upper projecting hammer region 378 that extends axially above the main hammer body 322 along an upper portion of the hammer 318. The second upper projecting hammer region 378 may include a second upper hammer stop surface 382.

Other examples of the hammer 318 may include only a single upper projecting hammer region and a single upper hammer stop surface (e.g., above the main hammer body 322), or more than two upper projecting hammer regions and more than two upper hammer stop surfaces (e.g., above the main hammer body 322).

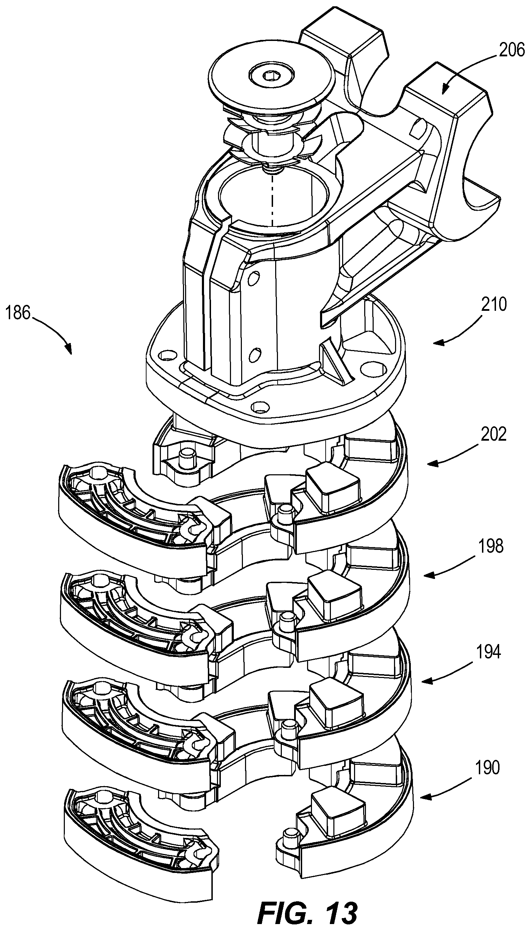

With reference to FIGS. 13-17, the hammer 318 may be coupled (e.g., directly coupled) to or linked (e.g., interlocked) with the spacer assembly 186, such that a rotational force (e.g., torque) applied to the handlebar 170 is transmitted from handlebar 170 through the handlebar stem 206 and the spacer assembly 186 to the hammer 318, to thereby rotate the hammer 318 and its various stop surfaces. In other examples, such as, for example, when the spacer assembly 186 is omitted, the hammer 318 may be coupled (e.g., directly coupled) to or linked (e.g., interlocked) with the handlebar stem 206 (e.g., the lower stem spacer 210), such that a rotational force (e.g., torque) applied to the handlebar 170 is transmitted from handlebar 170 through the handlebar stem 206 to the hammer 318, to thereby rotate the hammer 318 and its various stop surfaces. In some examples, the handlebar stem 206 (e.g., the lower stem spacer 210) and/or the spacer assembly 186 (or one or more of the spacers of the spacer assembly 186) may be considered another example of a dynamic stopping structure. For example, the hammer 318 may be considered an example of a first dynamic stopping structure, and the handlebar stem 206 (e.g., the lower stem spacer 210) or the spacer assembly 186 (or one or more of the spacers of the spacer assembly 186) may be considered a second dynamic stopping structure. In yet other examples, a dynamic stopping structure may be considered a combination of the spacer assembly 186 (or one or more spacers of the spacer assembly 186) and the hammer 318, or a combination of the handlebar stem 206 (or lower stem spacer 210), the spacer assembly 186 (or one or more spacers of the spacer assembly 186), and the hammer 318.

With reference to FIG. 13, and as described above, the spacer assembly 186 may include the first spacer 190, the second spacer 194 positioned axially above the first spacer 190, the third spacer 198 positioned axially above the second spacer 194, and the fourth spacer 202 positioned axially above the third spacer 198. Each of the first spacer 190, the second spacer 194, the third spacer 198, and the fourth spacer 202 may be modular and/or identical to one another, although in other examples one or more spacers may have a different size and/or shape than another one of the spacers. Additionally, and as described above, the handlebar stem 206 may include the lower stem spacer 210 along the bottom of the handlebar stem 206, and above the fourth spacer 202. Other examples may include other numbers and arrangements of spacers.

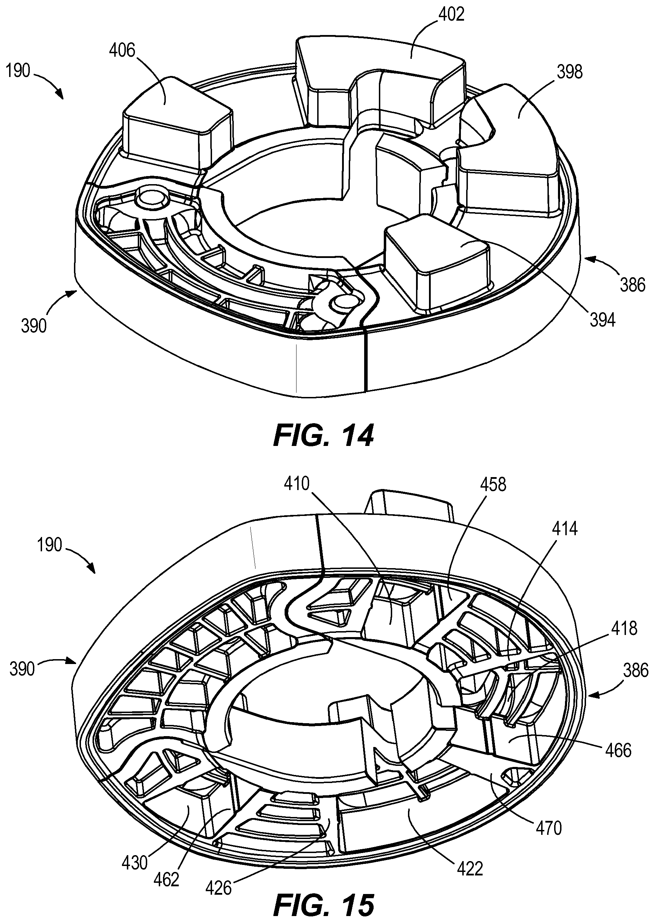

As illustrated in FIGS. 14 and 15, the first spacer 190 (and similarly the second spacer 194, the third spacer 198, and the fourth spacer 202) may include a first spacer body 386 and a second spacer body 390 coupled (e.g., fixed) to the first spacer body 386. The first spacer body 386 may be formed for example from a first type of material, and the second spacer body 390 may be formed from a second (e.g., different) type of material. In other examples, the first spacer 190 may include just a single spacer body, or more than two spacer bodies that are coupled (e.g., fixed) together, and/or may be formed from a single type of material.

With continued reference to FIGS. 14 and 15, the first spacer 190 (and similarly the second spacer 194, the third spacer 198, and the fourth spacer 202) may include at least one protrusion and/or at least one recess that facilitates an interlocking relationship between adjacent spacers of the spacer assembly 186. For example, when the spacers are stacked and assembled, the protrusion(s) of one spacer may extend into the recess(es) of an adjoining spacer of the spacers and the protrusion(s) of the adjoining spacer may extend into the recess(es) of a next adjoining spacer and so on, such that the spacers are interlocked, and are arranged to co-rotate with one another about the axis A1.

As illustrated in FIGS. 14 and 15, the first spacer 190 may include a first protrusion 394, a second protrusion 398, a third protrusion 402, and a fourth protrusion 406, each located along a top of the first spacer 190 (e.g., along the first spacer body 386). The first spacer 190 may further include a first recess 410, a wall 458, a wall 414, a second recess 418, a wall 466, a wall 470, a third recess 422, a wall 426, a wall 462, and a fourth recess 430. Other examples may include other numbers and arrangements of protrusions and/or recesses and/or walls. In some examples, the protrusion(s) may be located along a bottom of the spacer, and the recess(es) may be located along a top of the spacer.

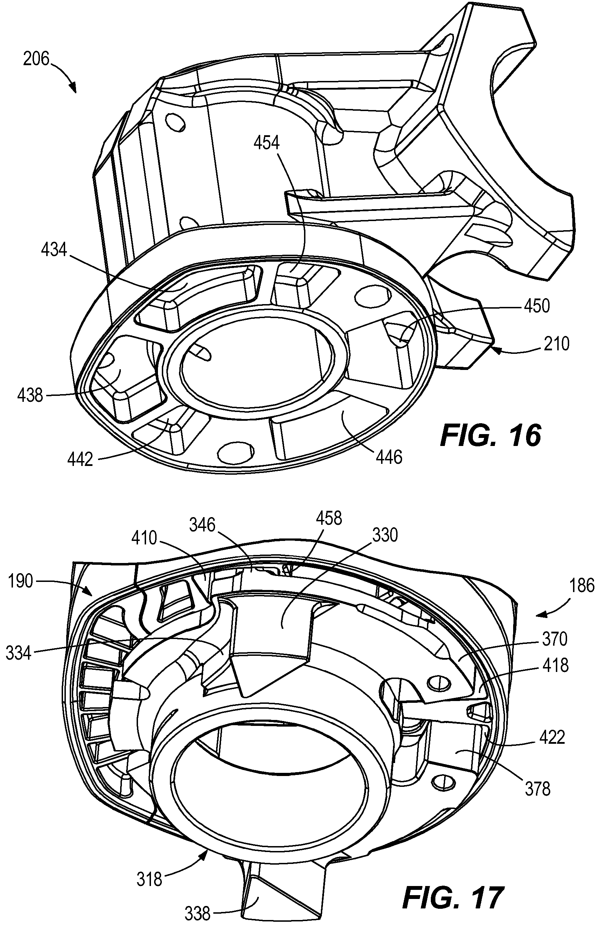

With reference to FIG. 16, the lower stem spacer 210 may also include at least one protrusion and/or recess that allows the lower stem spacer 210 to interlock with the spacer or spacers of the spacer assembly 186 (e.g., a topmost spacer of the spacer assembly 186), such that the spacer assembly 186 co-rotates with the handlebar stem 206 about the axis A1 (FIG. 2). For example, and as seen in FIG. 16, the lower stem spacer 210 may include a first recess 434, a second recess 438, a third recess 442, a fourth recess 446, a fifth recess 450, and a sixth recess 454. Other examples may include other numbers and/or arrangements of recesses (or protrusions).

With reference to FIGS. 17-22, the hammer 318 may be positioned relative to the spacer assembly 186, and/or interlocked with the spacer assembly 186, such that the hammer 318 also co-rotates with the spacer assembly 186 and the handlebar stem 206 when the handlebar 170 is rotated. For example, as seen in FIGS. 17-19, the hammer 318 may be positioned such that the first breakable fuse portion 346 extends upwardly into the first recess 410 of the first spacer 190. The first recess 410 may be defined in part by the wall 458. The wall 458 (and/or other walls in the first spacer 190) may act as a barrier or barriers that separate at least two recesses within the first spacer 190. The first breakable fuse portion 346 may be positioned adjacent the wall 458, such that when the spacer assembly 186 rotates about the first axis A1 (FIG. 2) in the first rotational direction, the wall 458 exerts a force on the first breakable fuse portion 346, causing the hammer 318 to rotate with the spacer assembly 186 and to move the first lower projecting hammer region 330 (with its first lower hammer stop surface 334) toward the static structure 254.

Similarly, the second breakable fuse portion 358 may extend upwardly into the fourth recess 430 of the first spacer 190. As illustrated in FIG. 15, the fourth recess 430 may also be defined in part by the wall 462. The second breakable fuse portion 358 may be positioned adjacent the wall 462, such that when the spacer assembly 186 rotates about the first axis A1 (FIG. 2) in the second rotational direction, the wall 462 exerts a force on the second breakable fuse portion 358, causing the hammer 318 to rotate with the spacer assembly 186 and to move the second lower projecting hammer region 338 (with its second lower hammer stop surface 342) toward the static structure 254.

With reference to FIGS. 17, 20, and 21, the first upper projecting hammer region 370 may extend upwardly into the second recess 418 of the first spacer 190. Similarly, the second upper projecting hammer region 378 may extend upwardly into the third recess 422 of the first spacer 190. As illustrated in FIGS. 15, 20, and 21, the second recess 418 may be defined in part by the wall 466. Similarly, the third recess 422 may be defined in part by the wall 470. In some examples, the wall 466 and the wall 470 may form a single structure.

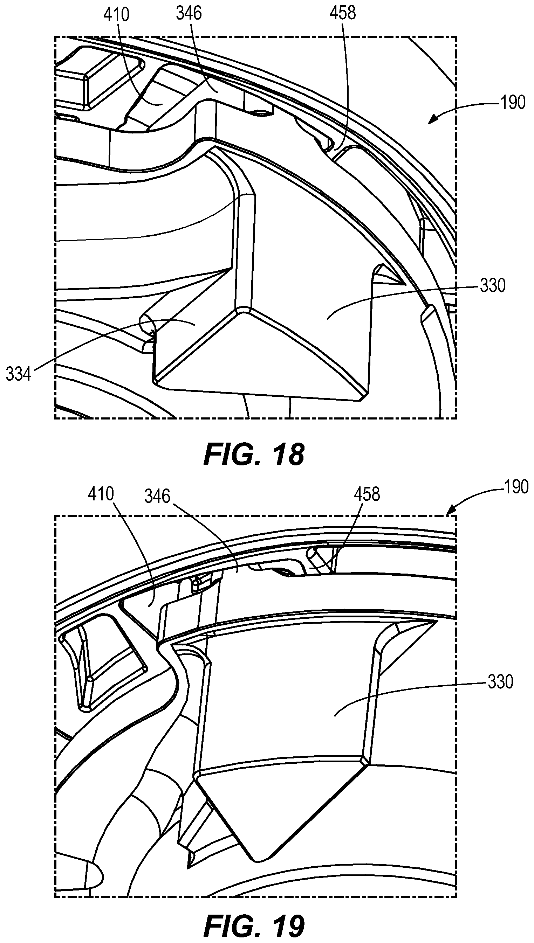

During operation of the steering stop assembly 178, the handlebar 170 may be rotated. Rotation of the handlebar 170 may cause a rotation of the handlebar stem 206 about the axis A1 (FIG. 2) in the first rotational direction. As described above, the lower stem spacer 210 of the handlebar stem 206 may be interlocked with the spacer assembly 186 (e.g., the fourth spacer 202 of the spacer assembly 186). Accordingly, rotation of the handlebar stem 206 may cause a co-rotation of the spacer assembly 186 and each of the fourth spacer 202, the third spacer 198, the second spacer 194, and the first spacer 190 in the first rotational direction. As illustrated in FIGS. 18 and 19, and as described above, the hammer 318 may be interlocked with the spacer assembly 186 (e.g., the first spacer 190 of the spacer assembly 186), such that when the first spacer 190 is rotated in the first rotational direction, the wall 458 presses against the first breakable fuse portion 346, causing the hammer 318 to also rotate in the first rotational direction until the first lower hammer stop surface 334 physically contacts and abuts the first static structure steering stop surface 302 of the static structure 254 fixed to the head tube 126. This engagement may act as a "first stopping stage" of the steering stop assembly 178.

If the handlebar 170 is further rotated, and/or if further torque is applied to rotate the handlebar 170, the first breakable fuse portion 346 may be designed to eventually fail and to break. For example, and as described above, the first breakable fuse portion 346 may include the first notch 354. As more torque is applied to rotate the handlebar 170, the applied torque may be transmitted through the handlebar stem 206 (e.g., the lower stem spacer 210) and through the spacer assembly 186, causing the wall 458 to press against the first breakable fuse portion 346 until a sufficient (e.g., predetermined) torque is reached, and the first breakable fuse portion 346 (and its first breakable stop surface 350) breaks.

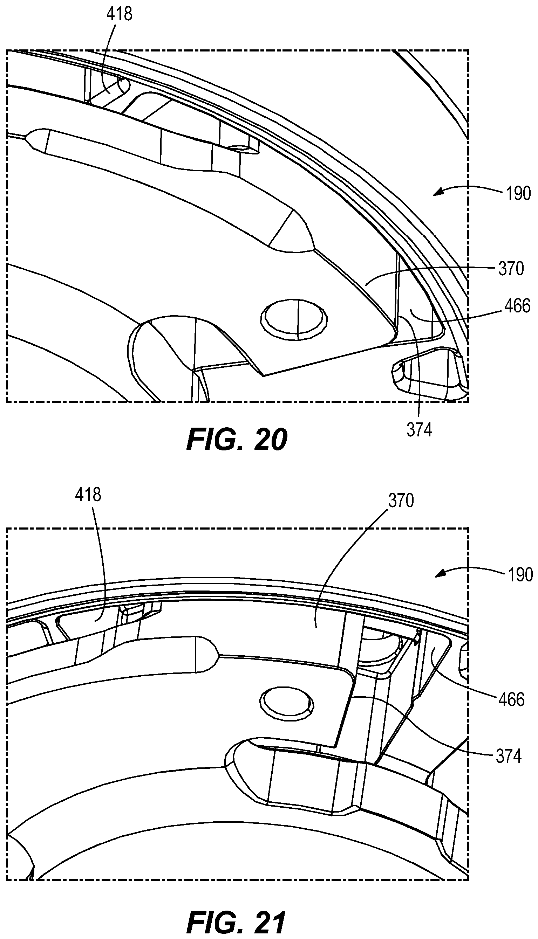

With reference to FIGS. 20 and 21, when the first breakable fuse portion 346 breaks, the hammer 318 itself may remain stationary relative to the head tube 126 (due to the physical contact and abutment of the first lower hammer stop surface 334 against the first static structure steering stop surface 302). However, because of the transferred torque still being applied through the spacer assembly 186, the first spacer 190 may again begin to rotate about the axis A1 (FIG. 2) in the first rotational direction. For example, and with continued reference to FIGS. 20 and 21, the first spacer 190 may continue to rotate, for example, until the wall 466 of the first spacer 190 physically contacts and abuts the first upper projecting hammer region 370 (e.g., the first upper hammer stop surface 374 of the first upper projecting hammer region 370). This engagement may act as a "second stopping stage" of the steering stop assembly 178. In some examples, this second stopping stage may further include engagement of the first spacer 190 (e.g., the wall 426 of the first spacer 190) with the second upper projecting hammer region 378.

The steering stop assembly 178 may operate in a similar manner if the handlebar 170 is rotated instead in the second rotational direction. For example, the hammer 318 may be rotated in the second rotational direction until a "first stopping stage" is reached, where the second lower hammer stop surface 342 physically abuts and contacts the second static structure steering stop surface 306. As more torque is applied, the second breakable fuse portion 358 (and its second breakable stop surface 362) may eventually break after a sufficient (e.g., predetermined) torque is reached, and the first spacer 190 may then further rotate until a "second stopping stage" is reached. For example, the wall 470 of the first spacer 190 may engage the second upper hammer stop surface 382. In some examples, this second stopping stage may further include engagement of the first spacer 190 (e.g., the wall 414 of the first spacer 190) with the first upper projecting hammer region 370.

In other examples, such as, for example, when the spacer assembly 186 is omitted, the hammer 318 may be positioned relative to the lower stem spacer 210 of the handlebar stem 206, and/or interlocked with the lower stem spacer 210, such that the hammer 318 also co-rotates with the handlebar stem 206 when the handlebar 170 is rotated. In these examples, the hammer 318 may engage and operate with the lower stem spacer 210 similarly to how it engages and operates with the spacer assembly 186 and/or the first spacer 190. For example, the hammer 318 may be positioned such that the first breakable fuse portion 346 extends upwardly into the first recess 434 of the lower stem spacer 210, and the second breakable fuse portion 358 extends upwardly into the sixth recess 454 of the lower stem spacer 210. Further, the first upper projecting hammer region 370 may extend upwardly into the third recess 442 of the lower stem spacer 210, and the second upper projecting hammer region 378 may extend upwardly into the fourth recess 446 of the lower stem spacer 210.

Overall, the steering stop assembly 178 may be considered a multi-stage steering stop assembly having at least a first stopping stage and a second stopping stage, such as for example the first stopping stage the second stopping stage described above. Other examples of a multi-stage steering stop may have other numbers and/or types of stopping stages than that described above (e.g., three stopping stages, and/or stopping stages that do not require breaking of a fuse portion).

In some other examples, the steering stop assembly 178 may be a multi-stage steering stop assembly having one dynamic stopping structure configured to engage multiple stop surfaces in succession. For example, the dynamic stopping structure may be configured such that when it is rotated in the first direction about axis A1 (FIG. 2) the dynamic stopping structure engages a first stop surface (e.g., the first breakable stop surface 350 of the first breakable fuse portion 346) and then engages a second stop surface (e.g., the first static structure steering stop surface 302 of the static structure 254) after the first stop surface breaks. Similarly, the dynamic stopping structure may be configured such that when it is rotated in the second direction about axis A1 (FIG. 2) the dynamic stopping structure engages another first stop surface (e.g., the second breakable stop surface 362 of the second breakable fuse portion 358) and then engages another second stop surface (e.g., the first static structure steering stop surface 306 of the static structure 254) after the first stop surface breaks. In some of these examples, a same surface of the dynamic stopping structure may engage both the first stop surface and the second stop surface in succession, and in other of these examples, different surfaces of the dynamic stop structure may engage the first stop surface and the second stop surface in succession.

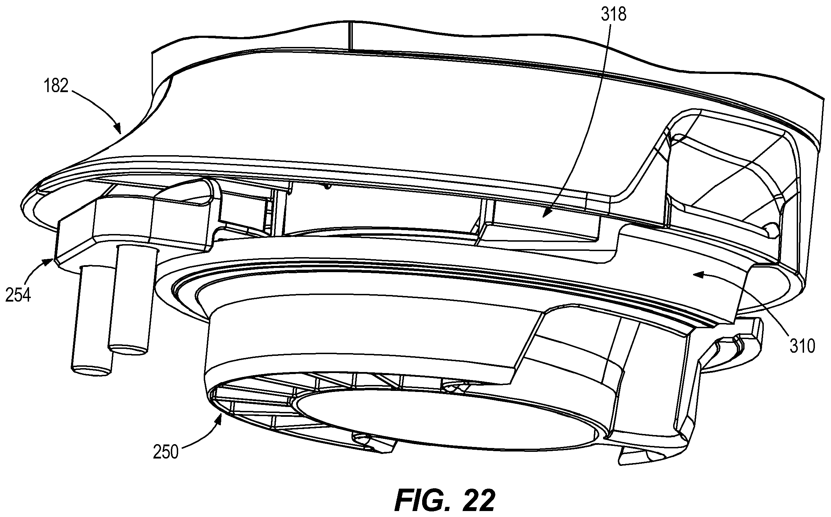

With reference to FIG. 22, in some examples the hammer 318 may be located within the top cap 182 during operation, and may be positioned above the bearing spacer 250. The top cap 182 may not be interlocked with the spacer assembly 186 and/or the handlebar stem 206. Instead, the spacer assembly 186 and/or the handlebar stem 206 may rest on top of the top cap 182, such that when the spacer assembly 186 is rotated to the first stopping stage and the second stopping stage as described above, the spacer assembly 186 and/or the handlebar stem 206 rotates relative to the top cap 182, and becomes visibly misaligned with the top cap 182.

In some examples, and with continued reference to FIG. 22, a portion of the hammer 318 (e.g., the first lower projecting hammer region 330) may at times engage the first bearing spacer wing 310 of the top cap 182, such that rotation of the hammer 318 along the second rotational direction may cause a limited rotation of the bearing spacer 250 relative to the head tube 126 about the axis A1 (FIG. 2). Additionally, the top cap 182 may be engaged with (e.g., interlocked with) the first bearing spacer wing 310 of the bearing spacer 250. Accordingly, rotation of the bearing spacer 250 may also limit rotation of the top cap 182 relative to the head tube 126. In other examples, the bearing spacer 250 and/or the top cap 182 may remain stationary at all times relative to the head tube 126.

With reference to FIGS. 2 and 3, in some examples one or more visual indicators (e.g., visible marks, coloration, etc.) may be used to visually inform a user whether the first breakable fuse portion 346 or the second breakable fuse portion 358 has broken, and/or whether the steering stop assembly 178 is in the second stopping stage as described above.

For example, the steering stop assembly 178 may include one or more visual indicators 474 (illustrated schematically) on the head tube 126 (e.g., at upper surface 262), one or more visual indicators 478 (illustrated schematically) on the top cap 182 (e.g., at an upper surface of the top cap 182), one or more visual indicators 482 (illustrated schematically) on at least one of the spacers of the spacer assembly 186 (e.g., at an upper surface of the at least one of the spacers of the spacer assembly 186), one or more visual indicators 486 (illustrated schematically) on the hammer 318 (e.g., at an upper surface of the hammer 318), and/or one or more visual indicators on any other structure of the steering stop assembly 178 and/or the bicycle 110. In some examples, if one of the fuse portions has broken, when steering the front wheel 114 back to a center position, the top cap 182 may be misaligned (e.g., by 5°, 10°, 15°, or other values and ranges of values) in an activation direction (e.g., rotational direction). In some examples, a red (or other color) painted surface (e.g., on top of the top cap 182) may appear. Other examples may include various other numbers and types of visual indicators indicating a position of the steering stop assembly 178, and/or indicating that a fuse portion (e.g., the first breakable fuse portion 346 or the second breakable fuse portion 358) has broken.

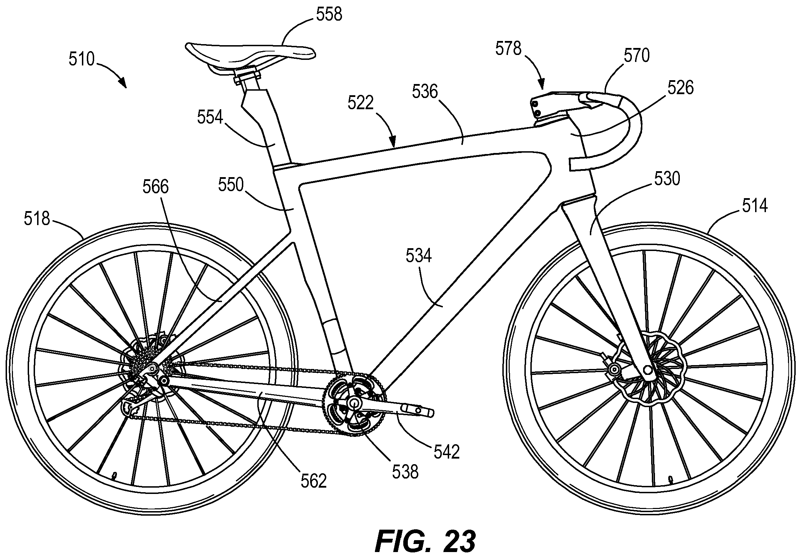

FIG. 23 illustrates another example of a bicycle 510 having a front wheel 514, a rear wheel 518, and a frame 522 supported by the front wheel 514 and the rear wheel 518. The bicycle 510 is illustrated in FIG. 23 as a road bicycle, but in other examples the bicycle 510 may be a road or other type of bicycle (e.g., an active (e.g., urban) bicycle, a mountain bicycle, a gravel bicycle, a hybrid bicycle), and/or may be an analog or electric bicycle. Further, although a particular configuration of the frame 522 is illustrated in FIG. 23, in other examples the bicycle 510 may be implemented with other configurations of the frame 522 than that which is illustrated. In these examples, the frame 522 may be implemented with other configurations having different shapes, sizes, and/or frame components. In many examples, bicycle 510 may be similar to bicycle 110, and/or one or more parts of bicycle 510 and/or of steering stop assembly 578 of bicycle 510 may be similar or identical to one or more parts of bicycle 110 and/or of steering stop assembly 178 of bicycle 110.

In some examples, the frame 522 may include a head tube 526, which may rotationally support the front fork 530. In further examples, the frame 522 may include a down tube 534 connected to the head tube 526 and extending rearward from the head tube 526, and/or a top tube 536 connected to and extending rearward from the head tube 526 (e.g., above the down tube 534).

In some examples, the frame 522 may include a bottom bracket 538, and the down tube 534 may extend generally downward from the head tube 526 and toward the bottom bracket 538 of the frame 522. The bottom bracket 538 may receive a crankset 542 of a drivetrain of the bicycle 510.

In some examples, the frame 522 may include a seat tube 550. The seat tube 550 may be connected, for example, to the bottom bracket 538 and/or to the top tube 536. The seat tube 550 may support a seat post 554 and a seat 558. For example, the seat tube 550 may receive the seat post 554, which may support the seat 558. The seat post 554 and/or the seat 558 may be adjustable (e.g., vertically) relative to the seat tube 550, such as, for example, to accommodate for different sizes of riders and/or for different slopes of terrain.

In some examples, the frame 522 may include a chainstay 562 and a seatstay 566. The frame 522 may include a frame triangle (e.g., a rear triangle) that supports the rear wheel 518, and the frame triangle may include the chainstay 562 and/or the seatstay 566. Further, the frame 522 may include a second chainstay and/or seatstay, and a second frame triangle (e.g., rear triangle) that supports the rear wheel 518 on an opposite side of the rear wheel 518. The second chainstay may be similar or identical to the chainstay 562, and/or the second seatstay may be similar or identical to the seatstay 566.

With continued reference to FIG. 23, in many examples, the bicycle 510 may include a handlebar 570 for turning the front fork 530, and the front wheel 514 via the front fork 530. The handlebar 570 may be coupled to the front fork 530, such as, for example, by a handlebar stem 670.

In some examples, the bicycle 510 may include at least one suspension assembly located at one or more positions on the bicycle 510, including on or within the frame 522 and/or on or within the front fork 530. For example, at least one suspension assembly may be located at least partially within the front fork 530, and/or formed as part of the front fork 530. The suspension assembly(s) may absorb and damp shocks exerted on the bicycle 510 such as by uneven terrain and other kinetic impacts, and may include springs (e.g., coil springs, fluid or air springs, elastomer springs), dampers, resilient materials, and/or other elements that individually, or in combination, function to absorb and damp shocks exerted on the bicycle 510.

In some examples, one or more of the suspension assembly(s) may be coupled (e.g., directly coupled) between two components of the bicycle 510. In further examples, one or more of the suspension assembly(s) may be coupled (e.g., directly coupled) between a component of the frame 522 and the rear wheel 518, and/or between a component of the front fork 530 and the front wheel 514. In some examples, the bicycle 510 includes a suspension assembly that is coupled to, or forms part of, the front fork 530. In other examples, one or more of the suspension assembly(s) may be coupled (e.g., directly coupled) between a component of the frame 522 and the seat post 554 and/or the seat 558. In yet other examples, one or more of the suspension assembly(s) may be coupled (e.g., directly coupled) between a component of the front fork 530 and the handlebar 570. In these or other examples, other quantities and/or positions of suspension assemblies may be implemented. Other examples may not include any suspensions assemblies.

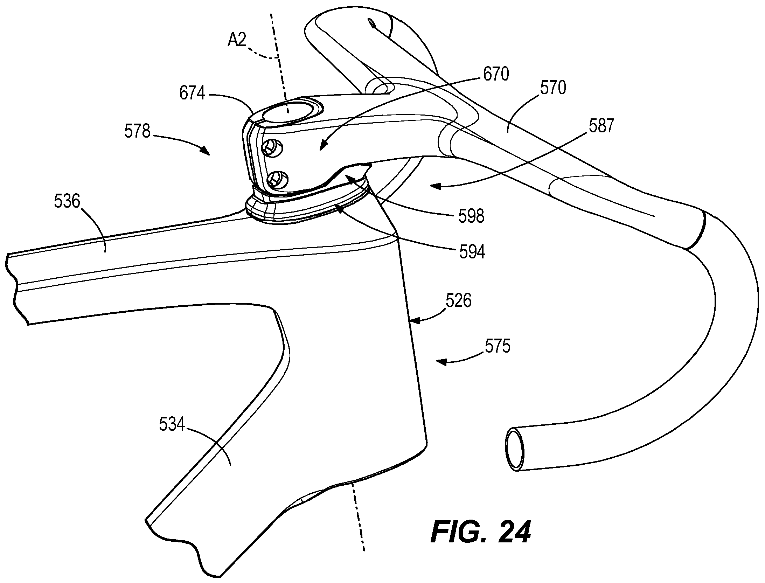

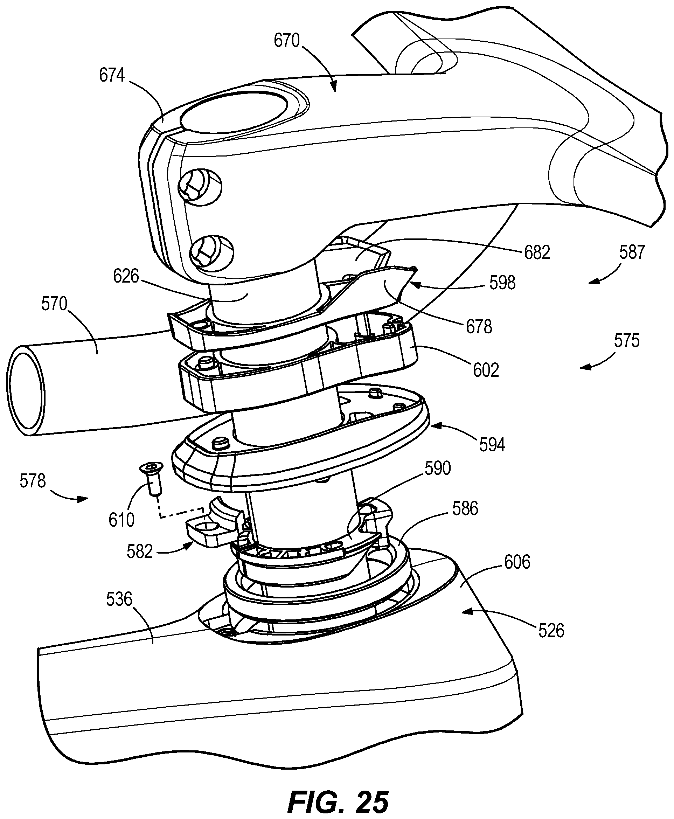

With reference to FIGS. 24 and 25, the bicycle 510 may include headset assembly 575 and a steering stop assembly 578, and in many examples, the headset assembly 575 may include at least part or all of the steering stop assembly 578. In many examples, the headset assembly 575 facilitates rotation of the front fork 530 about an axis A2 (FIG. 24). For example, the headset assembly 575 may facilitate rotation of a portion of the front fork 530 (e.g., a steerer tube of the front fork 530) within the head tube 526. In these or other examples, the steering stop assembly 578 limits rotation of the front fork 530 about the axis A2. In many examples, the steering stop assembly 578 further functions to limit rotational movement of the handlebar 570 and/or the front wheel 514 about the axis A2. As explained in more detail herein, the steering stop assembly 578 may inhibit damage to the frame 522, the handlebar 570, the front fork 530, the front wheel 514, cables, wires, and/or hydraulic hoses by limiting rotation of the front fork 530, the handlebar 570, and/or the front wheel 514 about the axis A2, thereby preventing the handlebar 570, the front fork 530, and/or the front wheel 514 from contacting the frame 522. The steering stop assembly 578 may include at least one dynamic stopping structure that rotates relative to the head tube 526 about the axis A2, and/or includes at least one stop surface that limits rotation of the front fork 530, the handlebar 570, and the front wheel 514 about the axis A2.

As illustrated in FIGS. 24 and 25, the headset assembly 575 may include one or more bearings 586 (e.g., positioned within the head tube 526), a compression ring 590, and/or a headset cover 594. For example, the bearing(s) 586 may include a lower headset bearing similar or identical to lower headset bearing 230 and/or an upper headset bearing similar or identical to upper headset bearing 234. In some examples, the steering stop assembly 578 may include the bearing(s) 586, the compression ring 590, and/or the headset cover 594.

In many examples, the steering stop assembly 578 may include a static structure 582 and/or a spacer assembly 587. In some examples, the static structure 582 may be coupled (e.g., fixed) to the frame 522 (e.g., to the head tube 526). In some examples, the spacer assembly 587 may include a transition spacer 598.

As illustrated in FIG. 25, in some examples the spacer assembly 587 may include at least one additional spacer 602 (e.g., positioned above the headset cover 594 and below the transition spacer 598, and/or being formed integrally as a monolithic piece with the headset cover 594). FIG. 24 illustrates an assembled arrangement without such an additional spacer 602.

With reference to FIG. 25, other examples of the steering stop assembly 578 may include other numbers and arrangements of components. For example, as described above, the spacer assembly 587 may not include the additional spacer 602, or may include more than one additional spacer 602. In some examples, the steering stop assembly 578 may not include the bearing(s) 586, the headset cover 594, the transition spacer 598, the compression ring 590, and/or other structure, and/or may include other sizes and shapes for any of the components. Additionally, in some examples the static structure 582 may be at least partially concealed (e.g., hidden from view) by the headset cover 594 and/or the additional spacer 602 (if provided) when the steering stop assembly 578 is assembled. In yet other examples, the entire static structure 582 may be visible.

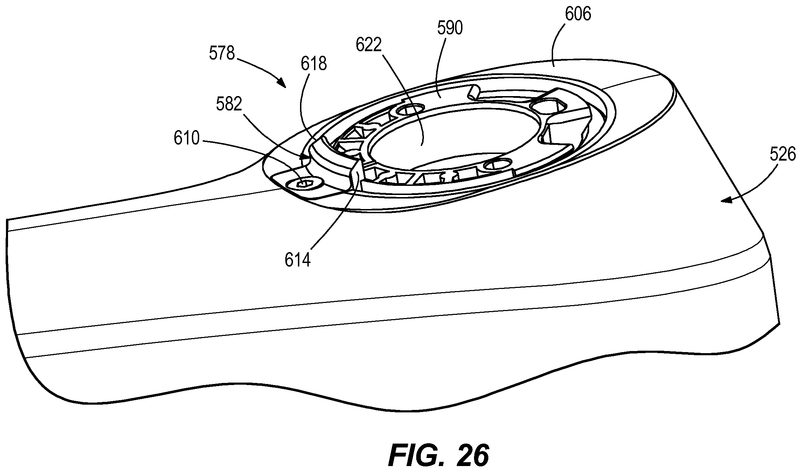

With reference to FIGS. 25 and 26, the head tube 526 may include an upper end 606. In many examples, the static structure 582 may be a frame chip. The frame chip may be coupled (e.g., fixed) to the head tube 526 at the upper end 606, or to another location of the head tube 526 or the frame 522 overall. In the illustrated example, the static structure 582 is fixed to the head tube 526 with a single fastener 610, although other examples may include other numbers and/or arrangements of fasteners. In some examples, the static structure 582 may be formed integrally as a single monolithic piece with the head tube 526 (e.g., as a protrusion, rib, and/or other integral structure), such that no fasteners and/or other structures are required to fix the static structure 582 to the head tube 526.

As illustrated in FIG. 26, the static structure 582 may include a first static structure steering stop surface 614 and a second static structure steering stop surface 618. The first static structure steering stop surface 614 may be oriented to face in a first direction such that the first static structure steering stop surface 614 limits rotation of the front fork 530, the handlebar 570, and the front wheel 514 in a first rotational direction about the axis A2 (FIG. 24). The second static structure steering stop surface 618 may be oriented to face in a second direction such that the second static structure steering stop surface 618 limits rotation of the front fork 530, the handlebar 570, and the front wheel 514 in a second rotational direction about the axis A2 (FIG. 24). The first direction may be opposite to the second direction, and/or the first rotational direction may be opposite to the second rotational direction.

With continued reference to FIG. 26, the compression ring 590 may be positioned at the upper end 606 of the head tube 526, and axially below each of the first static structure steering stop surface 614 and the second static structure steering stop surface 618. The compression ring 590 may include a central aperture 622 sized and shaped to receive a steerer tube 626 (FIG. 25) that may be coupled (e.g., fixed) to the front fork 530. Other examples may include other positions for the compression ring 590, or as described above may not include the compression ring 590.

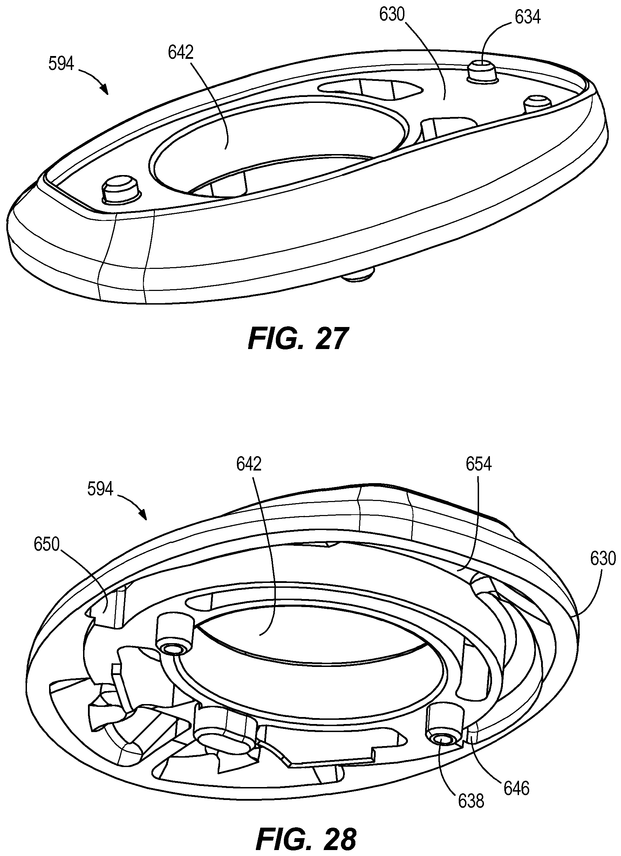

With reference to FIGS. 27 and 28, the headset cover 594 (and/or the additional spacer 602 if provided) may be one example of a dynamic stopping structure. The headset cover 594 may include a main body 630, and may further include at least one protrusion 634 and/or at least one recess 638 that may be used to interlock the headset cover 594 to the transition spacer 598 and/or to the additional spacer(s) 602. For example, as seen in FIGS. 27 and 28, a protrusion 634 may extend upwardly from the main body 630, and a recess 638 (e.g., a lower recess) may be located along a bottom of the main body 630. In other examples the headset cover 594 may include at least one protrusion 634 along a bottom of the main body 630, and at least one recess 638 along a top of the main body 630. In other examples, the headset cover 594 may not include any protrusions 634, and/or may not include any recesses 638. With continued reference to FIGS. 27 and 28, the headset cover 594 may additionally include a central aperture 642 sized and shaped to receive the steerer tube 626.

With reference to FIG. 28, in some examples the headset cover 594 may include at least one stop surface that limits rotational movement of the front fork 530, the handlebar 570, and/or the front wheel 514 about the axis A2 (FIG. 24). For example, and as illustrated in FIG. 28, the headset cover 594 may include a first headset cover stop surface 646 and a second headset cover stop surface 650. A groove (e.g., channel) 654 may extend partially or entirely between the first headset cover stop surface 646 and the second headset cover stop surface 650. Other examples may include other numbers and/or arrangements of stop surfaces and/or grooves than that illustrated. In some examples, the first headset cover stop surface 646 may be located outside of a groove, and/or the second headset cover stop surface 650 may be located outside of a groove.

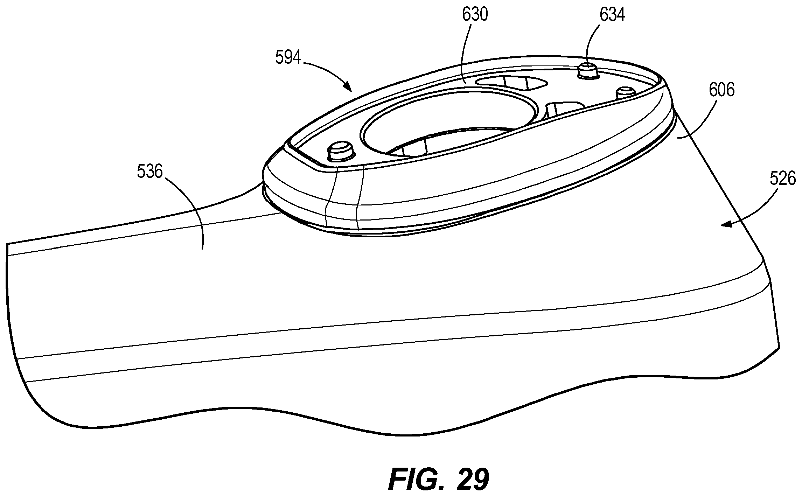

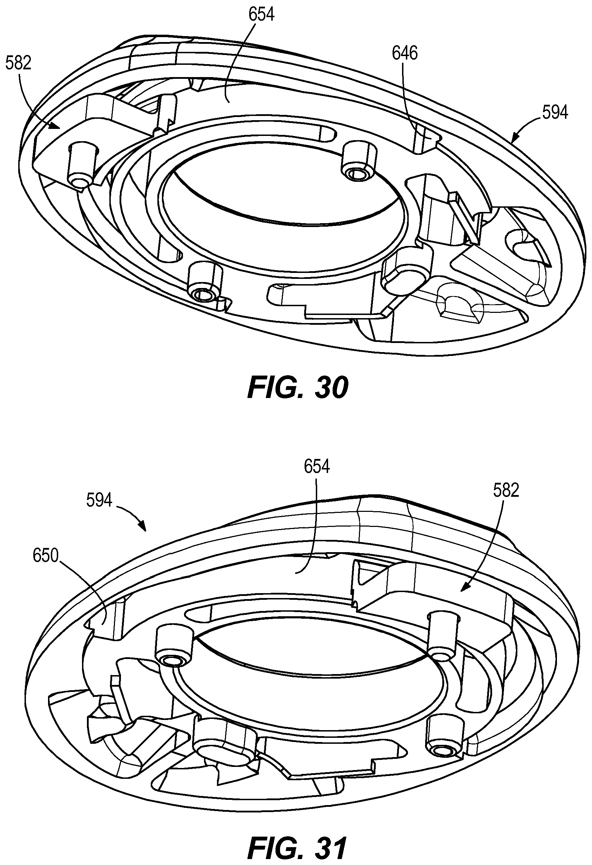

With reference to FIGS. 29-31, the headset cover 594 may rest on the upper end 606 of the head tube 526, and may be free to rotate (and for example slide along) relative to the head tube 526 (e.g., about the axis A2). For example, the headset cover 594 may rotate in the first rotational direction until the first headset cover stop surface 646 (or another stop surface) physically contacts and abuts the first static structure steering stop surface 614. Additionally, the headset cover 594 may rotate in the second rotational direction until the second headset cover stop surface 650 (or another stop surface) physically contacts and abuts the second static structure steering stop surface 618. As illustrated in FIGS. 30 and 31, at least a portion of the static structure 582 (e.g., a portion having the first static structure steering stop surface 614 and the second static structure steering stop surface 618) may extend into the groove 654.

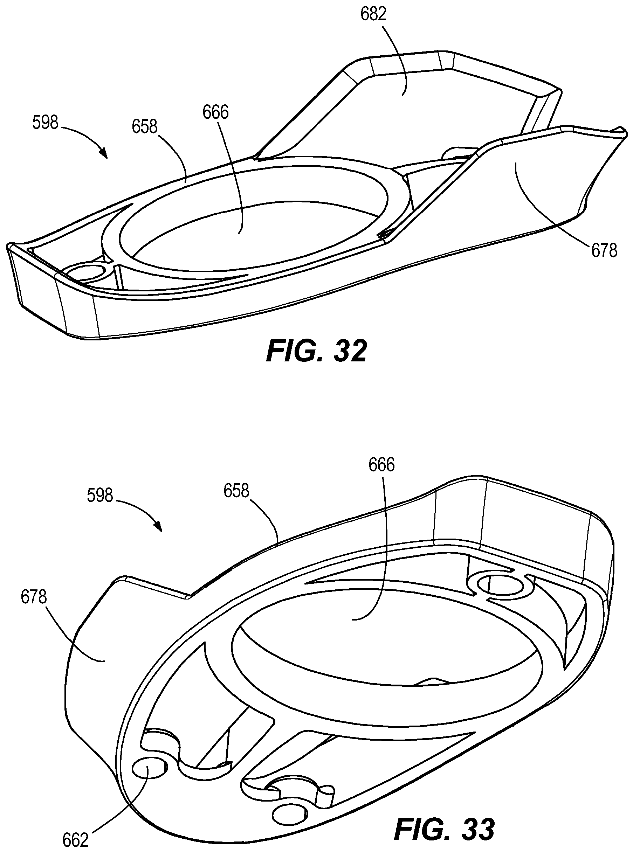

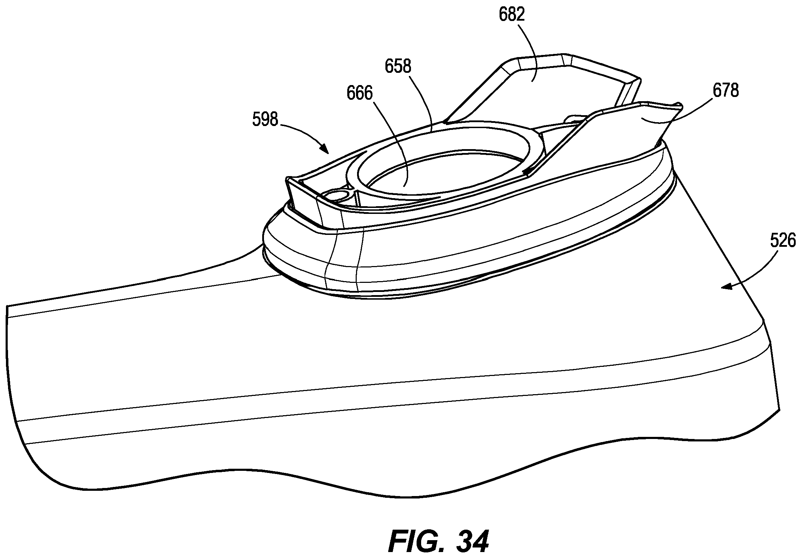

With reference to FIGS. 32-34, the transition spacer 598 may be another example of a dynamic stopping structure, or may be part of a dynamic stopping structure that includes for example both the transition spacer 598 and the headset cover 594. In some examples, the transition spacer 598 may include a transition spacer main body 658, and may include at least one protrusion and/or recess that may be used to interlock the transition spacer 598 to the handlebar stem 670 and/or the headset cover 594 (or other component). For example, and as illustrated in FIGS. 32 and 33, the transition spacer 598 may include at least one recess 662 in the transition spacer main body 658 that is sized and shaped to engage the protrusion 634 on the headset cover 594, to interlock the transition spacer 598 to the headset cover 594. Other examples of the transition spacer 598 may not include protrusions, and/or may not include recesses, or may include other structures that facilitate interlocking of the transition spacer to the headset cover 594. In yet other examples, the transition spacer 598 may be formed integrally as a single monolithic piece with the headset cover 594. As illustrated in FIGS. 32 and 33, the transition spacer 598 may additionally include a central aperture 666 that is sized and shaped to receive the steerer tube 626.

With reference to FIGS. 24 and 25, the steering stop assembly 578 may include a handlebar stem 670. The handlebar stem 670 may include a clamping region 674 that clamps onto the steerer tube 626. Other examples may not include a clamping region 674.

With reference to FIGS. 24, 25, and 32-34, the transition spacer 598 may include at least one transition spacer wing (e.g., protrusion, arm, or other extending structure) that is sized and shaped to physically contact and engage the handlebar stem 670 when the handlebar 570 is rotated. In the illustrated example, and as seen in FIGS. 32-34, the transition spacer 598 includes a first transition spacer wing 678 and a second transition spacer wing 682. The first transition spacer wing 678 is generally positioned along a first side of the handlebar stem 670, and the second transition spacer wing 682 is generally positioned along a second side of the handlebar stem 670. In some examples, the first transition spacer wing 678 and/or the second transition spacer wing 682 may be spaced (e.g., by a small gap) from the handlebar stem 670 when the front wheel 514 is facing directly forward along the bicycle 510. In other examples, the first transition spacer wing 678 and/or the second transition spacer wing 682 may always remain in physical contact with the handlebar stem 670.

During operation of the steering stop assembly 578, the handlebar 570 may be rotated. Rotation of the handlebar 570 may cause a rotation of the handlebar stem 670 about the axis A2 in the first rotational direction. As the handlebar stem 670 rotates, the handlebar stem 670 may press against the first transition spacer wing 678, generating rotation of the transition spacer 598 about the axis A2. As described above, the transition spacer 598 may be interlocked with the headset cover 594. Accordingly, the rotational movement of the transition spacer 598 may cause co-rotation of the headset cover 594. The headset cover 594 may rotate along the first rotational direction until the first headset cover stop surface 646 within the headset cover 594 physically contacts and abuts the first static structure steering stop surface 614 on the static structure 582, thereby creating at least a first stopping stage that stops any further rotation of the handlebar 570.

In some examples, the headset cover 594 may include a breakable surface (e.g., similar to the breakable stop surfaces described above in the steering stop assembly 178), such that the handlebar 570 may be rotated farther (e.g., another 5 degrees, 10 degrees, etc.) in the first rotational direction until another stop surface is contacted. In such examples, the steering stop assembly 578 may include one or more visual indicators (similar to the visual indicators described above for the steering stop assembly 178) that indicate that a breakable stop surface has broken.

The steering stop assembly 578 may operate in a similar manner if the handlebar 570 is rotated instead in the second rotational direction. For example, as the handlebar stem 670 rotates in the second rotational direction, the handlebar stem 670 may press against the second transition spacer wing 682, generating rotation of the transition spacer 598 about the axis A2. The rotational movement of the transition spacer 598 may cause co-rotation of the headset cover 594. The headset cover 594 may rotate along the second rotational direction until the second headset cover stop surface 650 within the headset cover 594 physically contacts and abuts the second static structure steering stop surface 618 on the static structure 582, thereby creating another stopping stage that stops any further rotation of the handlebar 570. In some examples, the headset cover 594 may include a breakable surface (e.g., similar to the breakable surfaces described above in the steering stop assembly 178), such that the handlebar 570 may be rotated farther (e.g., another 5 degrees, 10 degrees, etc.) in the second rotational direction until another stop surface is contacted.

While the steering stop assembly 578 has been described in the context of the bicycle 510 and the steering stop assembly 178 has been described in the context of the bicycle 110, the steering stop assemblies described herein may be used in combination with any bicycle. Additionally, one or more components of the steering stop assembly 178 may be used in combination with one or more components of the steering stop assembly 578, or vice versa, to form a steering stop assembly (e.g., a multi-stage steering stop assembly or other steering stop assembly). For example, any of the steering stop assemblies described herein may include the use of at least one static structure and at least one dynamic stopping structure, and/or may include the use of at least one stop surface (including for example a breakable stop surface).

Some of the examples described herein may be further described by reference to the following numbered clauses:
1. A multi-stage steering stop assembly comprising:
   a frame;
   a static structure fixed to the frame;
   a first dynamic stopping structure configured to rotate about an axis and engage the static structure, wherein the static structure is configured to limit rotation of the first dynamic stopping structure about the axis; and
   a second dynamic stopping structure configured to rotate relative to the first dynamic stopping structure about the axis, wherein the first dynamic stopping structure is configured to limit rotation of the second dynamic stopping structure about the axis.
2. The multi-stage steering stop assembly of clause 1, wherein the first dynamic stopping structure includes a first stop surface, wherein the first stop surface is configured to engage the static structure upon rotation of the first dynamic stopping structure about the axis.
3. The multi-stage steering stop assembly of clause 2, wherein the first dynamic stopping structure further includes a second, breakable stop surface, wherein the second, breakable stop surface is configured to break when a predetermined torque is applied to the second dynamic stopping structure about the axis.
4. The multi-stage steering stop assembly of clause 3, wherein the first dynamic stopping structure further includes a third stop surface, wherein the third stop surface is configured to limit rotation of the second dynamic stopping structure about the axis.
5. The multi-stage steering stop assembly of clause 4, wherein the first stop surface is located along a bottom of the first dynamic stopping structure, and wherein both the second, breakable stop surface and the third stop surface are located along a top of the first dynamic stopping structure.
6. The multi-stage steering stop assembly of any of the preceding clauses, wherein the frame includes a head tube, wherein the first dynamic stopping structure is positioned axially between the head tube and the second dynamic stopping structure along the axis.
7. The multi-stage steering stop assembly of any of the preceding clauses, wherein the frame includes a head tube, and wherein the static structure is fixed to the head tube.
8. The multi-stage steering stop assembly of clause 7, wherein the first dynamic stopping structure is a hammer positioned at a top of the head tube, wherein the hammer includes a first stop surface along a lower portion of the hammer that is configured to engage the static structure when the second dynamic stopping structure has rotated about the axis, and wherein the second dynamic stopping structure is a spacer positioned above the hammer.
9. The multi-stage steering stop assembly of clause 8, further comprising a handlebar stem positioned above the spacer, wherein the spacer is rotationally coupled to the handlebar stem, such that rotational movement of the handlebar stem is configured to co-rotate the spacer about the axis, and wherein the spacer is further rotationally coupled to the hammer, such that rotation of the spacer is configured to rotate the hammer about the axis.
10. The multi-stage steering stop assembly of clause 9, wherein the spacer includes a lower recess, wherein the hammer includes a second, breakable stop surface along an upper portion of the hammer that extends upwardly into the lower recess of the spacer, wherein the second, breakable stop surface is configured to break when a predetermined torque is applied to the spacer.
11. The multi-stage steering stop assembly of clause 10, wherein the lower recess is a first lower recess, wherein the spacer includes a second lower recess separated from the first lower recess by a wall, wherein the hammer includes a third stop surface along an upper portion of the hammer that extends upwardly into the second lower recess, and wherein the third stop surface is configured to engage the wall after the second, breakable stop surface has broken and the second dynamic stopping structure has rotated further about the axis.
12. The multi-stage steering stop assembly of any of the preceding clauses, wherein the second dynamic stopping structure is configured to rotate relative to the first dynamic stopping structure about the axis after a portion of the first dynamic stopping structure has failed.
13. The multi-stage steering stop assembly of clause 12, further comprising an indicator configured to inform a user that the portion of the first dynamic stopping structure has failed and that the second dynamic stopping structure has rotated about the axis relative to first dynamic stopping structure.
14. The multi-stage steering stop assembly of any of the preceding clauses, wherein the first dynamic stopping structure includes a first stop surface along a bottom of the first dynamic stopping structure that is configured to engage the static structure, and wherein the first dynamic stopping structure includes a second stop surface along a top of the first dynamic stopping structure that is configured to engage the second dynamic stopping structure.
15. The multi-stage steering stop assembly of any of the preceding clauses, wherein the first dynamic stopping structure includes a breakable stop surface, and wherein the second dynamic stopping structure is configured to break the breakable stop surface.
16. The multi-stage steering stop assembly of any of the preceding clauses, wherein a portion of the first dynamic stopping structure extends into the second dynamic stopping structure, wherein the second dynamic stopping structure includes a wall, and wherein the wall is configured limit rotation of the second dynamic stopping structure relative to the first dynamic stopping structure.
17. The multi-stage steering stop assembly of clause 16, wherein the second dynamic stopping structure includes a first lower recess and a second lower recess, wherein the wall separates the first lower recess from the second lower recess.
18. The multi-stage steering stop assembly of any of the preceding clauses, wherein the static structure is a frame chip fixed to the frame with a fastener.
19. The multi-stage steering stop assembly of any of the preceding clauses, wherein the static structure is configured to limit rotation of the first dynamic stopping structure in both a first direction about the axis and also a second, opposite direction about the axis.
20. A bicycle comprising:
   the multi-stage steering stop assembly of any of the preceding clauses, wherein the frame is a bicycle frame.
21. A steering stop assembly comprising:
   a frame;
   a static structure coupled to the frame;
   a handlebar coupled to the frame and having a handlebar stem; and
   a dynamic stopping structure positioned below the handlebar stem and interlocked with the handlebar stem, such that rotation of the handlebar is configured to rotate the dynamic stopping structure, wherein the dynamic stopping structure includes a stop surface configured to engage the static structure upon rotation of the handlebar.
22. The steering stop assembly of clause 21, wherein the dynamic stopping structure includes a transition spacer having a transition spacer main body and a transition spacer wing extending from the transition spacer main body, wherein the handlebar stem is configured to press against the transition spacer wing to rotate the dynamic stopping structure.
23. The steering stop assembly of clause 22, wherein the dynamic stopping structure further includes a headset cover having the stop surface, wherein the stop surface is a first headset cover stop surface, and wherein the headset cover further includes a second headset cover stop surface.
24. The steering stop assembly of any of clauses 21-23, wherein the dynamic stopping structure includes spacers positioned below the handlebar stem that are interlocked to one another, such that the spacers are configured to co-rotate with one another.
25. The steering stop assembly of any of clauses 21-24, wherein the dynamic stopping structure includes a spacer interlocked with and positioned below the handlebar stem, such that the spacer is configured to co-rotate with the handlebar stem, and wherein the dynamic stopping structure further includes a hammer interlocked with and positioned below the spacer, such that the hammer is configured to co-rotate with the spacer.
26. The steering stop assembly of clause 25, wherein the hammer includes the stop surface.
27. The steering stop assembly of clause 26, wherein the stop surface is a first stop surface, wherein the hammer further includes a second, breakable stop surface.
28. The steering stop assembly of any of clauses 21-27, wherein the dynamic stopping structure includes a first dynamic stopping structure and a second dynamic stopping structure that is able to rotate relative to the first dynamic stopping structure.
29. The steering stop assembly of clause 28, further comprising a visual indicator configured to inform a user that a portion of the first dynamic stopping structure has failed and that the second dynamic stopping structure has rotated relative to first dynamic stopping structure.
30. The steering stop assembly of clause 28 or clause 29, wherein the stop surface is located along a bottom of the first dynamic stopping structure, and wherein the first dynamic stopping structure further includes a separate, breakable stop surface along a top of the first dynamic stopping structure that is configured to engage the second dynamic stopping structure.
31. A multi-stage steering stop assembly comprising:
   a frame;
   a static structure fixed to the frame;
   a first dynamic stopping structure configured to rotate about an axis and engage the static structure, wherein the static structure is configured to limit rotation of the first dynamic stopping structure about the axis;
   a second dynamic stopping structure configured to rotate relative to the first dynamic stopping structure about the axis after a portion of the first dynamic stopping structure has failed; and
   a visual indicator configured to inform a user that the portion of the first dynamic stopping structure has failed and that the second dynamic stopping structure has rotated about the axis relative to first dynamic stopping structure.
32. The multi-stage steering stop assembly of clause 31, wherein the visual indicator includes a visible mark along the first dynamic stopping structure.
33. The multi-stage steering stop assembly of clause 31 or clause 32, wherein the first dynamic stopping structure is a hammer, wherein the multi-stage steering stop assembly further includes a top cap coupled to the hammer, and wherein the visual indicator includes a visible mark along the top cap.
34. The multi-stage steering stop assembly of clause 33, wherein the first dynamic stopping structure includes a first stop surface along a bottom of the hammer to engage the static structure.
35. The multi-stage steering stop assembly of clause 34, wherein the portion of the first dynamic stopping structure that fails includes a second, breakable stop surface along a top of the hammer.
36. The multi-stage steering stop assembly of clause 35, wherein the second dynamic stopping structure includes a wall, and wherein the hammer includes a third stop surface configured to engage the wall of the second dynamic stopping structure after the second, breakable stop surface has failed and the second dynamic stopping structure has rotated further relative to the first dynamic stopping structure.
37. A multi-stage steering stop assembly comprising:
   a frame;
   a static structure fixed to the frame;
   a first dynamic stopping structure configured to rotate about an axis; and
   a second dynamic stopping structure configured to rotate about the axis;
   wherein the first dynamic stopping structure includes a first stop surface along a bottom of the first dynamic stopping structure that is configured to engage the static structure, and wherein the first dynamic stopping structure includes a second stop surface along a top of the first dynamic stopping structure that is configured to engage the second dynamic stopping structure.
38. The multi-stage steering stop assembly of clause 37, further comprising a visual indicator configured to inform a user that the second stop surface has failed and that the second dynamic stopping structure has rotated about the axis relative to first dynamic stopping structure.
39. The multi-stage steering stop assembly of clause 38, wherein the first dynamic stopping structure includes a third stop surface, wherein the third stop surface is configured to limit rotation of the second dynamic stopping structure relative to the first dynamic stopping structure.
40. A multi-stage steering stop assembly comprising:
   a frame;
   a static structure fixed to the frame;
   a first dynamic stopping structure configured to rotate about an axis and engage the static structure, wherein the static structure is configured to limit rotation of the first dynamic stopping structure about the axis; and
   a second dynamic stopping structure configured to rotate relative to the first dynamic stopping structure about the axis, wherein the first dynamic stopping structure includes a breakable stop surface, and wherein the second dynamic stopping structure is configured to break the breakable stop surface.
41. The multi-stage steering stop assembly of clause 40, wherein the breakable stop surface is part of a fuse portion on the first dynamic stopping structure, and wherein the fuse portion includes a notch configured to facilitate breaking of the breakable stop surface.
42. The multi-stage steering stop assembly of clause 40 or clause 41, wherein the breakable stop surface is located along a top of the first dynamic stopping structure and extends into the second dynamic stopping structure.
43. The multi-stage steering stop assembly of any of clause 40-42, wherein the first dynamic stopping structure includes an additional stop surface configured to engage the static structure.
44. A multi-stage steering stop assembly comprising:
   a frame;
   a static structure fixed to the frame;
   a first dynamic stopping structure configured to rotate about an axis and engage the static structure, wherein the static structure is configured to limit rotation of the first dynamic stopping structure about the axis; and
   a second dynamic stopping structure configured to rotate relative to the first dynamic stopping structure about the axis, wherein a portion of the first dynamic stopping structure extends into the second dynamic stopping structure, wherein the second dynamic stopping structure includes a wall, and wherein the wall is configured limit rotation of the second dynamic stopping structure relative to the first dynamic stopping structure.
45. The multi-stage steering stop assembly of clause 44, wherein the second dynamic stopping structure includes a first recess and a second recess, wherein the first recess is separated from the second recess by the wall.
46. The multi-stage steering stop assembly of clause 44 or clause 45, wherein the portion of the first dynamic stopping structure includes a breakable stop surface.
47. The multi-stage steering stop assembly of clause 46, wherein the portion of the first dynamic stopping structure further includes an additional stop surface configured to engage the wall.
48. A multi-stage steering stop assembly comprising:
   a frame;
   a first stop surface;
   a second stop surface; and
   a dynamic stopping structure configured to rotate about an axis relative to the frame, wherein at least a portion of the dynamic stopping structure is configured to engage the first stop surface upon a rotation of the dynamic stopping structure about the axis, and wherein at least a portion of the dynamic stopping structure is configured to engage the second stop surface after the first stop surface has failed.
49. The multi-stage steering stop assembly of clause 48, wherein the dynamic stopping structure includes a first dynamic stopping structure and a second dynamic stopping structure, wherein the second dynamic stopping structure is configured to rotate relative to the first dynamic stopping structure.
50. The multi-stage steering stop assembly of clause 49, wherein the first stop surface is a fixed stop surface fixed to the frame, and wherein the second stop surface is a stop surface on the first dynamic stopping structure.

When used in this specification and claims, the terms "comprises" and "comprising" and variations thereof mean that the specified features, steps or integers are included. The terms are not to be interpreted to exclude the presence of other features, steps or components.

The invention may also broadly consist in the parts, elements, steps, examples and/or features referred to or indicated in the specification individually or collectively in any and all combinations of two or more said parts, elements, steps, examples and/or features. In particular, one or more features in any of the embodiments described herein may be combined with one or more features from any other embodiment(s) described herein.

Protection may be sought for any features disclosed in any one or more published documents referenced herein in combination with the present disclosure.

Although certain example embodiments of the invention have been described, the scope of the appended claims is not intended to be limited solely to these embodiments. The claims are to be construed literally, purposively, and/or to encompass equivalents.

Various features and advantages of the disclosure are set forth in the following claims.

## Claims

1. A multi-stage steering stop assembly comprising:
a frame;
a static structure fixed to the frame;
a first dynamic stopping structure configured to rotate about an axis and engage the static structure, wherein the static structure is configured to limit rotation of the first dynamic stopping structure about the axis; and
a second dynamic stopping structure configured to rotate relative to the first dynamic stopping structure about the axis, wherein the first dynamic stopping structure is configured to limit rotation of the second dynamic stopping structure about the axis.

2. The multi-stage steering stop assembly of claim 1, wherein the first dynamic stopping structure includes a first stop surface, wherein the first stop surface is configured to engage the static structure upon rotation of the first dynamic stopping structure about the axis.

3. The multi-stage steering stop assembly of claim 2, wherein the first dynamic stopping structure further includes a second, breakable stop surface, wherein the second, breakable stop surface is configured to break when a predetermined torque is applied to the second dynamic stopping structure about the axis.

4. The multi-stage steering stop assembly of claim 3, wherein the first dynamic stopping structure further includes a third stop surface, wherein the third stop surface is configured to limit rotation of the second dynamic stopping structure about the axis.

5. The multi-stage steering stop assembly of claim 4, wherein the first stop surface is located along a bottom of the first dynamic stopping structure, and wherein both the second, breakable stop surface and the third stop surface are located along a top of the first dynamic stopping structure.

6. The multi-stage steering stop assembly of any of the preceding claims, wherein the frame includes a head tube, wherein the first dynamic stopping structure is positioned axially between the head tube and the second dynamic stopping structure along the axis.

7. The multi-stage steering stop assembly of any of the preceding claims, wherein the frame includes a head tube, and wherein the static structure is fixed to the head tube.

8. The multi-stage steering stop assembly of claim 7, wherein the first dynamic stopping structure is a hammer positioned at a top of the head tube, wherein the hammer includes a first stop surface along a lower portion of the hammer that is configured to engage the static structure when the second dynamic stopping structure has rotated about the axis, and wherein the second dynamic stopping structure is a spacer positioned above the hammer.

9. The multi-stage steering stop assembly of claim 8, further comprising a handlebar stem positioned above the spacer, wherein the spacer is rotationally coupled to the handlebar stem, such that rotational movement of the handlebar stem is configured to co-rotate the spacer about the axis, and wherein the spacer is further rotationally coupled to the hammer, such that rotation of the spacer is configured to rotate the hammer about the axis.

10. The multi-stage steering stop assembly of claim 9, wherein the spacer includes a lower recess, wherein the hammer includes a second, breakable stop surface along an upper portion of the hammer that extends upwardly into the lower recess of the spacer, wherein the second, breakable stop surface is configured to break when a predetermined torque is applied to the spacer.

11. The multi-stage steering stop assembly of claim 10, wherein the lower recess is a first lower recess, wherein the spacer includes a second lower recess separated from the first lower recess by a wall, wherein the hammer includes a third stop surface along an upper portion of the hammer that extends upwardly into the second lower recess, and wherein the third stop surface is configured to engage the wall after the second, breakable stop surface has broken and the second dynamic stopping structure has rotated further about the axis.

12. The multi-stage steering stop assembly of any of the preceding claims, wherein the second dynamic stopping structure is configured to rotate relative to the first dynamic stopping structure about the axis after a portion of the first dynamic stopping structure has failed.

13. The multi-stage steering stop assembly of claim 12, further comprising an indicator configured to inform a user that the portion of the first dynamic stopping structure has failed and that the second dynamic stopping structure has rotated about the axis relative to first dynamic stopping structure.

14. The multi-stage steering stop assembly of any of the preceding claims, wherein the first dynamic stopping structure includes a first stop surface along a bottom of the first dynamic stopping structure that is configured to engage the static structure, and wherein the first dynamic stopping structure includes a second stop surface along a top of the first dynamic stopping structure that is configured to engage the second dynamic stopping structure.

15. The multi-stage steering stop assembly of any of the preceding claims, wherein the first dynamic stopping structure includes a breakable stop surface, and wherein the second dynamic stopping structure is configured to break the breakable stop surface.
